(19) Europäisches Patentamt / European Patent Office / Office européen des brevets

(11) **EP 4 543 723 B1**

(12) **EUROPEAN PATENT SPECIFICATION**

(45) Date of publication and mention
of the grant of the patent:
**04.03.2026 Bulletin 2026/10**

(21) Application number: **23741775.3**

(22) Date of filing: **20.06.2023**

(51) International Patent Classification (IPC):
*B60T 17/18* (2006.01)   *B60T 17/22* (2006.01)
*B61H 1/00* (2006.01)   *B61H 3/00* (2006.01)
*B61H 5/00* (2006.01)   *B60T 8/17* (2006.01)
*B60T 8/1763* (2006.01)   *B60T 17/08* (2006.01)

(52) Cooperative Patent Classification (CPC):
**B60T 8/1705; B60T 8/17636; B60T 8/3235;
B60T 17/08; B60T 17/18; B60T 17/228; B61H 1/00;**
B60T 2270/406; F16D 2066/005

(86) International application number:
**PCT/IB2023/056377**

(87) International publication number:
**WO 2023/248131 (28.12.2023 Gazette 2023/52)**

(54) **METHODS FOR VERIFYING THE OPERATION OF AT LEAST ONE BRAKING MEANS OF AT LEAST ONE VEHICLE AND CORRESPONDING VERIFICATION SYSTEMS**

VERFAHREN ZUR ÜBERPRÜFUNG DER FUNKTION MINDESTENS EINER BREMSVORRICHTUNG MINDESTENS EINES FAHRZEUGS UND ENTSPRECHENDE ÜBERPRÜFUNGSSYSTEME

PROCÉDÉS DE VÉRIFICATION DU FONCTIONNEMENT D'AU MOINS UN MOYEN DE FREINAGE D'AU MOINS UN VÉHICULE ET SYSTÈMES DE VÉRIFICATION CORRESPONDANTS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **21.06.2022 IT 202200013066**

(43) Date of publication of application:
**30.04.2025 Bulletin 2025/18**

(73) Proprietor: **Faiveley Transport Italia S.p.A.
10045 Piossasco (TO) (IT)**

(72) Inventors:
• **FREA, Matteo
10060 CANTALUPA (Torino) (IT)**
• **TIONE, Roberto
10020 LAURIANO (Torino) (IT)**

(74) Representative: **Cristinelli, Luca et al
Jacobacci & Partners S.p.A.
Corso Emilia, 8
10152 Torino (IT)**

(56) References cited:
EP-A1- 2 918 459   WO-A1-2022/006614
US-A- 6 028 402   US-A1- 2008 304 065
US-A1- 2014 088 801   US-A1- 2020 079 343
US-A1- 2020 377 064   US-B1- 6 823 242

**Description**

Technical field

The present invention generally relates to the field of braking systems. In particular, the invention relates to methods for verifying the operation of at least one braking means of at least one vehicle, in particular at least one railway vehicle, and to systems for verifying the operation of at least one braking means of at least one vehicle, in particular at least one railway vehicle. The verification of the operation, i.e. the diagnosis, may also be carried out in real time.

Prior art

The prior art will be described below with particular reference to the field of railway vehicles. The above may be applied similarly, where possible, also to vehicles of other fields traveling by rail.

After the activation of a railway vehicle or a railway convoy including several railway vehicles, before its entry into service, for example daily operation, an action known to those skilled in the art as a "brake test" is carried out. This action is necessary to verify the correct operation of the one or more braking means of a braking system, as a whole of the railway vehicle or of the railway convoy.

The "brake test" is performed with different methods depending on the composition of the type of one or more railway vehicles and the composition of the railway convoy.

In the case of the latest generation of railway convoys, known as fixed composition, the brake test is generally automated. For example, by means of pressure sensors connected to braking cylinders of a braking system, the braking control means (e.g. computer) check that the pneumatic braking pressures controlled by them are actually present at said braking cylinders, within predetermined tolerance bands.

However, this type of automatic check is not able to verify that the braking cylinder of the braking system generates the braking force, corresponding to the braking pressure, to a pad-disc or shoe-wheel clutch pair. Malfunctions of the braking cylinder may for example vary the nominal pressure/force ratio by locally reducing the braking force generated by the braking means.

In the case of freight convoys, comprising for example of a locomotive and a plurality of railway vehicles (e.g. freight wagons), there is no information means of communication between said locomotive and the connected railway vehicles. In this case, the "brake test" includes a procedure which involves an operator, who is asked to check, at least visually, that in the absence of pneumatic braking pressure the shoe 103 of the various braking means is detached from the wheel, or that the pad of the various braking means is detached from the disc. The operator should also check that in the presence of pneumatic braking pressure, the shoe is in contact with the wheel, or the pad is in contact with the disc.

This procedure requires an extremely long time, as for the visual verification the operator is forced to walk along the railway vehicle or railway convoy on each side, in all its length. This procedure is carried out in the case of braking generated by the various braking means and then repeated in the case of braking released by the various braking means. Furthermore, the visual analysis does not ensure that, when visually the braking is applied, the pressure actually applied to the braking cylinders corresponds to the nominal one, concealing hidden faults to one or more pneumatic components in the braking force generation chain.

The problem relating to the "brake test" was previously described with reference to pneumatic braking systems. However, the same problem may be found likewise in electro-pneumatic or electromechanical braking systems and in the related braking application means.

Recent technological developments propose to provide each railway vehicle with a self-powered data acquisition system through "energy harvesting" systems, connected to appropriate pressure and force sensors, provided with wireless communication means, and capable of transmitting to the ground data related to the brake test during the "brake test" step.

As much as the proposed system works, it implies a high cost both in terms of hardware components and in terms of installation and upgrade costs for the complete fleet.

Furthermore, since the "brake test" is a procedure inherent to safety in operation, it may imply onerous costs of development and certification in accordance with the safety standards in force (EN50126, EN50128, EN50129) as regards the data acquisition and especially transmission system.

In the field of vehicles with rubber wheels, equipment is available for periodically checking a braking system comprising one or more braking means, where the vehicle under test is first positioned on rollers which impart rotation to the wheels and, subsequently, the one or more braking means of the vehicle under test are activated. Finally, the braking torque imparted to the rollers is measured. Based on this measurement, the efficiency of the braking system is evaluated. Obviously, this approach may not be applied in the case of rail vehicles, e.g. a railway vehicle or a railway convoy, at the beginning of each daily mission, due to the complexity of application on each axle of each vehicle making up the railway convoy and due to the time required to perform it.

US 2014/088801 A1 relates to a method of monitoring the performance of a wheel brake for a wheel on a train car. However, the aforementioned problems remain unsolved.

Summary of the invention

An object of the present invention is to provide a solution which allows a possible malfunction of at least one braking means of at least one vehicle arranged to run on rails to be detected.

A further object of the present invention is therefore to provide effective solutions which do not involve high costs as regards both the hardware components and the installation and upgrade costs of a possible complete fleet.

A further object is to provide solutions which do not involve onerous development and certification costs.

The above and other objects and advantages are achieved, according to one aspect of the invention, by methods for verifying the operation of braking means of at least one vehicle having the features defined in the respective independent claims 1, 3, 5 and 7, and according to a further aspect of the invention, by systems for verifying the operation of at least one braking means of at least one vehicle having the features defined in the respective independent claims 12, 13, 14 and 15.

Preferred embodiments of the invention are defined in the dependent claims, the content of which is to be understood as an integral part of the present description.

Brief description of the drawings

The functional and structural features of some preferred embodiments of methods for verifying the operation of at least one braking means of at least one vehicle and of systems for verifying the operation of at least one braking means of at least one vehicle according to the invention will now be described. Reference is made to the accompanying drawings, wherein:

- Figure 1 illustrates by way of example a braking cylinder and a shoe of braking means, which are arranged to act on a wheel in transit in contact on a rail;

- Figure 2a illustrates an exemplary vehicle running on a rail;

- Figure 2b illustrates a further exemplary vehicle running on a rail;

- Figure 3 illustrates an exemplary vehicle running on an inclined rail;

- Figure 4 illustrates an exemplary vehicle which is towed by a locomotion means;

- Figure 5 illustrates an embodiment of a system for verifying the operation of at least one braking means of at least one vehicle according to the invention;

- Figure 6 illustrates a further embodiment of a system for verifying the operation of at least one braking means of at least one railway vehicle according to the invention.

- Figure 7 illustrates an embodiment of a system for measuring a friction force arranged to measure a friction force value;

- Figure 8 illustrates a further embodiment of a system for measuring a friction force arranged to measure a friction force value.

Detailed description

Before explaining in detail a plurality of embodiments of the invention, it should be clarified that the invention is not limited in its application to the design details and configuration of the components presented in the following description or illustrated in the drawings. The invention may assume other embodiments and be implemented or constructed in practice in different ways. It should also be understood that the phraseology and terminology have a descriptive purpose and should not be construed as limiting. The use of "include" and "comprise" and the variations thereof are intended to cover the elements set out below and the equivalents thereof, as well as additional elements and the equivalents thereof.

Furthermore, throughout the present disclosure and in the claims, the terms and expressions indicating positions and orientations, such as "longitudinal", "transverse", "vertical" or "horizontal", refer to a generic ground 205 longitudinal to the travel direction of the one or more vehicles.

As regards the figures, a side view is used and what is shown and described for a wheel supported on a respective rail may be understood as duplicated and applied to a pair of wheels constrained by an axle, and to two rails constituting a track, wherein each rail is associated with a respective wheel.

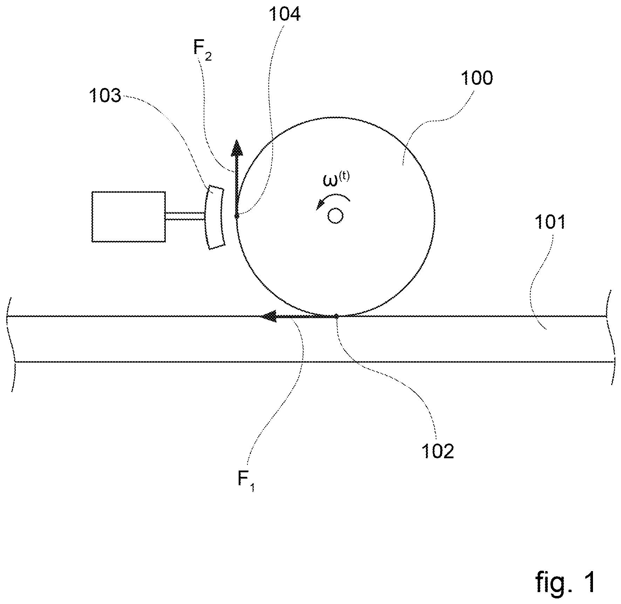

Observing for example Figure 1, a braking system of the shoe-on-wheel type is illustrated. A person skilled in the art is able to apply the present invention in a similar way also to a braking system of the pad-on-disc type.

A wheel 100 having angular speed $\omega(t)$ rests on a rail 101 at the contact point 102. A shoe may exert an equivalent braking force $F_2$ on the wheel 100 at a point 104.

At the point of contact 102 between the wheel 100 and the rail 101, a friction force $F_1$ will consequently be generated.

The equation of equilibrium of the forces acting on the circumference of the wheel 100 having a radius r and moment of inertia J, except for rolling frictions not significant for the discussion of the present invention, is reported herein [the wheel 100 having angular velocity $\omega(t)$]:

$$F_2 - F_1 = \frac{d\omega(t)}{dt} \cdot J/r$$

For constant non-zero values of ω(t) we will have:

$$\frac{d\omega(t)}{dt} = 0$$

And therefore, under conditions of constant speed ω(t):

$$F_2 = F_1$$

Therefore, being able to measure the friction force $F_1$ in a condition of constant ω(t), the value of the braking force $F_2$ will be obtained directly, irrespective of the physical parameters of the wheel, or of the axle, unless there are forces related to rolling frictions, for example related to bearings, which in any case may be considered negligible for the purpose of the present invention.

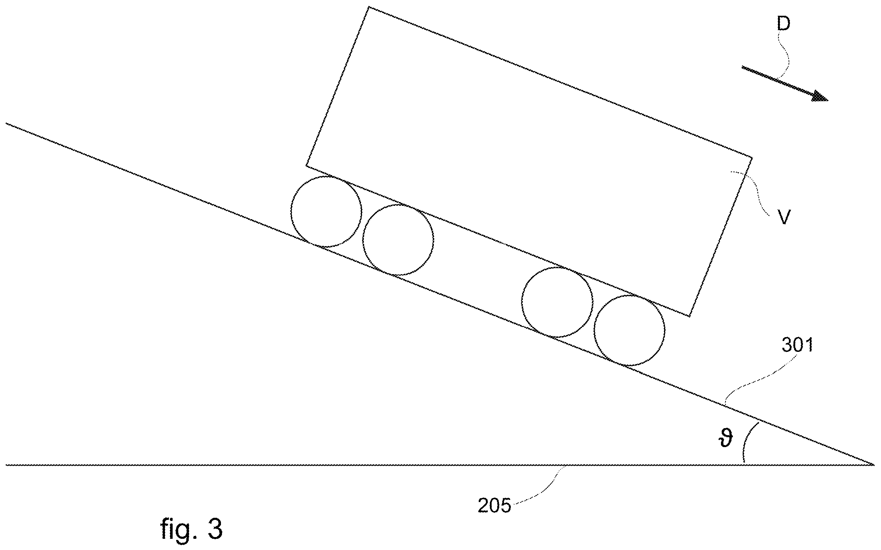

Otherwise, if the vehicle is for example on an inclined rail, as for example illustrated in Figure 3, the vehicle may not move at a constant speed but rather according to an accelerated motion, for example generated by the inclination of the rail and by the force of gravity g. For such a case, the equations of equilibrium of forces and moments acting on the circumference of a wheel 100, except for rolling frictions that are not significant for the discussion of the present invention, are reported herein (the wheel 100 having angular velocity ω(t) and the vehicle having acceleration $\ddot{x}$).

$$F_1 - F_2 \sin\theta + M\,g\sin\theta = m\,\ddot{x}$$

$$F_1 + F_2 = -\frac{J}{r}\,\frac{d\omega(t)}{dt}$$

where:

    r is the wheel radius;
    J is ½ of the axle inertia;
    M is the mass of the vehicle acting on the rail;
    m is ½ the mass of an axle.

Considering a condition of pure rolling on all wheels, the following equation holds:

$$\frac{d\omega(t)}{dt} = \frac{\ddot{x}}{r}$$

From the previous equations it is possible to explicit $F_2$ for the single wheel

$$F_2 = \frac{F_1\left(\frac{mr^2}{J}+1\right)+M\,g\sin\theta}{\sin\theta - \frac{mr^2}{J}}.$$

The above formulas are known to those skilled in the art and are only a possible example of the various formulas which may be used.

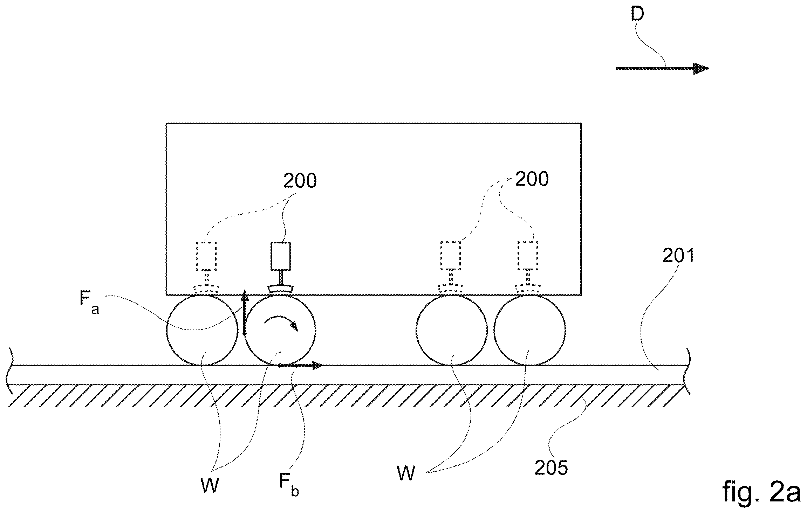

A first embodiment of a method for verifying the operation of at least one braking means of at least one vehicle, in particular at least one railway vehicle, is described below. For this embodiment, reference may be made to Figure 2a. Vehicle V comprises:

- at least one wheel W or at least one axle to which at least one wheel is coupled; the at least one wheel being arranged to run on a rail 201;
- at least one braking means associated with said at least one wheel or associated with said at least one axle.

In this first embodiment, the method for verifying the operation of at least one braking means comprises the steps described below.

Step a): moving said at least one vehicle V along said rail 201.

In other words, vehicle V is moved along rail 201.

Step b): providing said at least one braking means 200 with a predetermined actuation signal adapted to request said at least one braking means to generate a braking force having a predetermined verification braking force value Fa on the at least one wheel W or on the at least one axle.

In other words, in step b) the at least one braking means 200 is required to generate a verification braking force value Fa on the at least one wheel W or on the at least one axle.

Step c): when said at least one braking means is required to generate a braking force having a predetermined verification braking force value Fa on the at least one wheel or on the at least one axle, measuring at least one friction force value Fb exerted by the at least one wheel on the rail at a point of contact between said rail and said at least one wheel, the friction force value Fb being caused by an actual braking force generated by the at least one braking means 200 in response to the received actuation signal.

In other words, in step c) at least one value of the friction force Fb exerted by the at least one wheel W on the rail 201 which is present when the at least one braking means 200 should generate the braking force having the predetermined verification braking force value Fa is measured. Clearly, in case of correct operation of the at least one braking means, when the at least one braking means is required to generate the braking force having the predetermined verification braking force value Fa, the at least one braking means will generate a braking force having the predetermined verification braking force value Fa. Conversely, in the event of a malfunction of the at least one braking means, even if the at least one braking means was required to generate the braking force having the predetermined verification braking force value Fa, the at least one braking means 200 may not have generated any braking force or may have generated a braking force having a value other than said predetermined verification braking force value Fa. The at least one friction force value exerted by the at least one wheel on the rail 201 will therefore be a function of the braking force value which has actually been generated by the at least one braking means.

Step d): converting the measured friction force value Fb into an estimated braking force value.

In other words, by means of suitable conversion formulas, the measured friction force value Fb is converted into an estimated braking force value.

Step e): comparing the at least one estimated braking force value with said predetermined verification braking force value Fa;

In other words, in step e) the at least one estimated braking force value is compared with the predetermined verification braking force value Fa, which is a value that is expected in case the braking means works correctly and is generating the braking force having the predetermined verification braking force value Fa.

Step f): determining that the at least one braking means is malfunctioning when the at least one estimated braking force value is different from said predetermined verification braking force value Fa.

Finally, in step f) it is determined that the at least one braking means is malfunctioning when the at least one estimated braking force value is different from said predetermined verification braking force value Fa, which was expected in the case in which the braking means had worked properly by generating the braking force having the predetermined verification braking force value Fa.

Preferably, step f) may comprise:

f') verifying whether said estimated braking force value differs from said verification braking force value Fa by at least a predetermined tolerance value;
f") determining that the at least one braking means is malfunctioning, if it has been verified that said estimated braking force value differs from said verification braking force value Fa by at least said predetermined tolerance value.

In other words, the difference must be greater than or equal to a predetermined tolerance value in order for the at least one braking means to be considered malfunctioning. **In** this way, the risk that any normal physiological variations of the estimated braking force value are recognized as malfunctions of the at least one braking means is reduced.

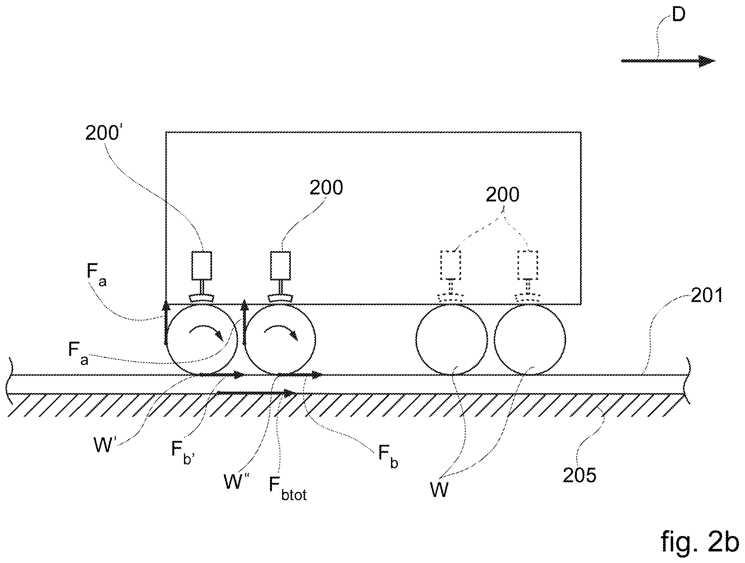

A second embodiment of a method for verifying the operation of at least one braking means of at least one vehicle, in particular at least one railway vehicle, is described below. For this embodiment, reference may be made to Figure 2b. Also in this embodiment, the at least one vehicle comprises:

- a plurality of wheels W', W" or a plurality of axles to which respective wheels are coupled, said wheels being arranged to run on a rail 201;
- a plurality of braking means 200, 200', wherein each braking means of said plurality of braking means is associated with at least one of said wheels or associated with at least one of said axles.

In this second embodiment, the method for verifying the operation of at least one braking means comprises the steps described below.

Step a): moving said at least one vehicle V along the rail 201.

In other words, the vehicle is moved along the rail.

Step b): providing said braking means with at least one predetermined actuation signal adapted to request said braking means to generate respective braking forces having a predetermined verification braking force value Fa on said wheels or said axles.

In other words, in step b) the braking means 200, 200' are required to generate respective braking force values Fa on the respective wheels associated with them or on the respective axles associated with them.

Step c): when such braking means are required to generate the respective braking forces having a predetermined verification braking force value Fa on the wheels or axles, measuring at least one total friction force value $Fb_{tot}$ generated on the rail by the sum of the respective friction force values Fb, Fb' exerted by the wheels at the respective points of contact between said rail and said wheels, the respective friction force values Fb, Fb' being generated by respective effective braking forces generated by the braking means in response to the at least one received actuation signal.

In other words, in step c) an overall friction force value $Fb_{tot}$ generated on the rail is determined by the sum of respective friction force values Fb, Fb' exerted by the wheels at respective points of contact between the rail and said wheels. The respective friction force values Fb, Fb' are generated by the respective effective braking forces which are actually generated when the braking means should generate the respective braking forces having the predetermined verification braking force value Fa. Clearly, in case of correct operation of the braking means, when the braking means 200, 200' are required to generate the respective braking forces having the predetermined verification braking force value Fa, each of the braking means will generate the braking force having the predetermined verification braking force value Fa. Conversely, in the event of a malfunction of one or more of the braking means, even if the braking means were required to generate respective braking forces having the predetermined verification braking force value Fa, the one or more malfunctioning braking means may not have generated any braking force or may have generated a braking force having a value other than said predetermined verification braking force value Fa. The total friction force value $Fb_{tot}$, generated on the rail by the sum of the respective friction force values Fb, Fb' exerted by the respective wheels, will therefore be a function of the effective braking force values that have actually been generated by the braking means.

Step d): converting the total friction force value $Fb_{tot}$ exerted by the wheels into an estimated total braking force value.

In other words, by means of suitable conversion formulas, the total friction force value $Fb_{tot}$ is converted into an estimated total braking force value.

Step e): comparing the at least one estimated total braking force value with an expected verification total braking force value.

In other words, in step e) the predetermined estimated total braking force value is compared with an expected verification total braking force value, which is a value that is expected in case all the braking means 200, 200' work correctly and are generating the respective braking forces having the predetermined verification braking force value Fa.

Step f) determining that at least one braking means of said plurality of braking means 200, 200' is malfunctioning when the estimated total braking force value is different from the expected verification total braking force value.

Finally, in step f) it is determined that at least one braking means of said plurality of braking means is malfunctioning when the estimated total braking force value is different from the expected verification total braking force value, which was expected in the case in which all the braking means had worked properly by generating the respective braking forces having the predetermined verification braking force value Fa.

Preferably, as regards the second embodiment just described, step f) may comprise:

f") verifying whether said estimated total braking force value differs from said expected verification total braking force value by at least a predetermined tolerance value;

f") determining that the at least one braking means is malfunctioning, if it has been verified that said estimated total braking force value differs from said expected verification total braking force value by at least said predetermined tolerance value.

In other words, the difference must be greater than or equal to a predetermined tolerance value in order for at least one braking means of the plurality of braking means to be considered malfunctioning. In this way, the risk that any normal physiological variations of the estimated total braking force value are recognized as malfunctions of the at least one braking means is reduced.

Furthermore, still with reference to the second embodiment described, the expected verification total braking force value may be a function of the sum of the expected verification braking force values Fa required of each braking means of said plurality of braking, respectively, through the actuation signal.

A third embodiment of a system for verifying the operation of at least one braking means of at least one vehicle, in particular at least one railway vehicle, is described below. For this embodiment, reference may again be made to Figure 2a. The at least one vehicle includes:

- at least one wheel W or at least one axle to which at least one wheel is coupled, said at least one wheel being arranged to run on a rail 201;
- at least one braking means 200 associated with said at least one wheel or associated with said at least one axle.

In this third embodiment, the method for verifying the operation of at least one braking means comprises the steps described below.

Step a): moving said at least one vehicle V along the rail 201.

In other words, the vehicle is moved along the rail.

Step b): providing said at least one braking means 200 with a predetermined actuation signal adapted to request said at least one braking means 200 to generate a braking force having a predetermined verification braking force value Fa on the at least one wheel or on the at least one axle.

In other words, in step b) the at least one braking means 200 is required to generate a verification braking force value Fa on the at least one wheel or on the at least one axle.

Step c): when at least one braking means is required to generate a braking force having a predetermined verification braking force value Fa on the at least one wheel or on the at least one axle, measuring at least one friction force value Fb exerted by the at least one wheel on the rail at a point of contact between said rail and said at least one wheel, the friction force value Fb being generated by an actual braking force generated by the at least one braking means in response to the received actuation signal.

In other words, in step c) at least one value of the friction force exerted by the at least one wheel on the rail which is present when the at least one braking means should generate the braking force having the predetermined verification braking force value Fa is measured. Clearly, in case of correct operation of the at least one braking means, when the at least one braking means is required to generate the braking force having the predetermined verification braking force value Fa, the at least one braking means will generate a braking force having the predetermined verification braking force value Fa. Conversely, in the event of a malfunction of the at least one braking means, even if the at least one braking means was required to generate the braking force having the predetermined verification braking force value Fa, the at least one braking means may not have generated any braking force or may have generated a braking force having a value other than said predetermined verification braking force value Fa. The at least one friction force value exerted by the at least one wheel on the rail will therefore be a function of the braking force value which has actually been generated by the at least one braking means.

Step d): comparing the measured at least one friction force value Fb with an expected friction force value.

In other words, in step d) the at least one measured friction force value Fb, which depends on the actual braking force value that was actually generated by the at least one braking means, is compared with an expected friction force value.

Step e): determining that the at least one braking means is malfunctioning when said at least one measured friction force value Fb differs from said expected friction force value.

Finally, in step e) it is determined that the at least one braking means is malfunctioning when at least one friction force value Fb is different from the expected friction force value, which was expected in the case in which the braking means had worked properly by generating the braking force having the predetermined verification braking force value Fa.

Preferably, as regards the third embodiment just described, step e) may comprise:

  e') verifying whether said friction force value Fb differs from said expected friction force value by at least a predetermined tolerance value;
  e") determining that the at least one braking means is malfunctioning, if it has been verified that said friction force value Fb differs from said expected friction force value by at least said predetermined tolerance value.

In other words, the difference must be greater than or equal to a predetermined tolerance value in order for the at least one braking means to be considered malfunctioning. In this way, the risk that any normal physiological variations of the measured friction force value Fb are recognized as malfunctions of the at least one braking means is reduced.

Again with reference to the third embodiment described, the expected friction force value may be a function of the predetermined verification braking force value.

A fourth embodiment of a method for verifying the operation of at least one braking means of at least one vehicle, in particular at least one railway vehicle, is described below. For this embodiment, reference may again be made to Figure 2b. The at least one vehicle includes:

- a plurality of wheels W, W' or a plurality of axles to which respective wheels are coupled, said wheels being arranged to run on a rail;
- a plurality of braking means 200, 200', wherein each braking means of said plurality of braking means is associated with at least one of said wheels or associated with at least one of said axles.

In this fourth embodiment, the method for verifying the operation of at least one braking means comprises the steps described below.

Step a): moving said at least one vehicle along the rail.

In other words, the vehicle is moved along the rail.

Step b): providing said braking means 200, 200' with at least one predetermined actuation signal adapted to request said braking means to generate respective braking forces having a predetermined verification braking force value Fa on the wheels or axles.

In other words, in step b) the braking means are required to generate respective verification braking force values Fa on the respective wheels associated with them or on the respective axles associated with them.

Step c): when the braking means are required to generate the respective braking forces having a predetermined verification braking force value Fa on the wheels or axles, measuring at least one total friction force value $Fb_{tot}$ generated on the rail by the sum of the respective friction force values Fb exerted by the wheels at the respective points of contact between said rail and said wheels, the respective friction force values Fb being generated by respective effective braking forces generated by the braking means in response to the at least one received actuation signal.

In other words, in step c) a total friction force value $Fb_{tot}$ generated on the rail is determined by the sum of respective friction force values Fb exerted by the wheels at respective points of contact between the rail and said wheels. The respective friction force values Fb are generated by the respective effective braking forces which are actually generated when the braking means should generate the respective braking forces having the predetermined verification braking force value Fa. Clearly, in case of correct operation of the braking means, when the braking means are required to generate the respective braking forces having the predetermined verification braking force value Fa, each of the braking means will generate the braking force having the predetermined verification braking force value Fa. Conversely, in the event of a malfunction of one or more of the braking means, even if the braking means were required to generate respective braking forces having the predetermined verification braking force value Fa, the one or more malfunctioning braking means may not have generated any braking force or may have generated a braking force having a value other than said predetermined verification braking force value Fa. The total friction force value $Fb_{tot}$, generated on the rail by the sum of the respective friction force values Fb exerted by the respective wheels, will therefore be a function of the effective braking force values that have actually been generated by the braking means.

Step d): comparing the total friction force value $Fb_{tot}$ with an expected total friction force value.

In other words, in step d) the total friction force value $Fb_{tot}$, which depends on the actual braking force values that have actually been generated by the braking means, is compared with an expected total friction force value.

Step e): determining that at least one braking means of said plurality of braking means is malfunctioning when the total friction force value $Fb_{tot}$ differs from the expected total friction force value.

Finally, in step e) it is determined that the at least one braking means of said plurality of braking means is malfunctioning when the total friction force value $Fb_{tot}$ is different from the expected total friction force value, which was expected in the case in which all the braking means had worked properly by generating the respective braking forces having the predetermined verification braking force value Fa.

With reference to the fourth embodiment described, step e) may comprise:

e') verifying whether said total friction force value $Fb_{tot}$ differs from said expected total friction force value by at least a predetermined tolerance value;
e") determining that the at least one braking means is malfunctioning, if it has been verified that said total friction force value $Fb_{tot}$ differs from said expected total friction force value by at least said predetermined tolerance value.

In other words, the difference must be greater than or equal to a predetermined tolerance value in order for the at least one braking means to be considered malfunctioning. In this way, the risk that any normal physiological variations of the total friction force value $Fb_{tot}$ are recognized as malfunctions of the at least one braking means is reduced.

Furthermore, still with reference to the fourth embodiment described, the expected total friction force value may be a function of the expected verification braking force value and of the number of braking means arranged to receive said actuation signal.

Further embodiments are given below which may be applied to all the embodiments described above.

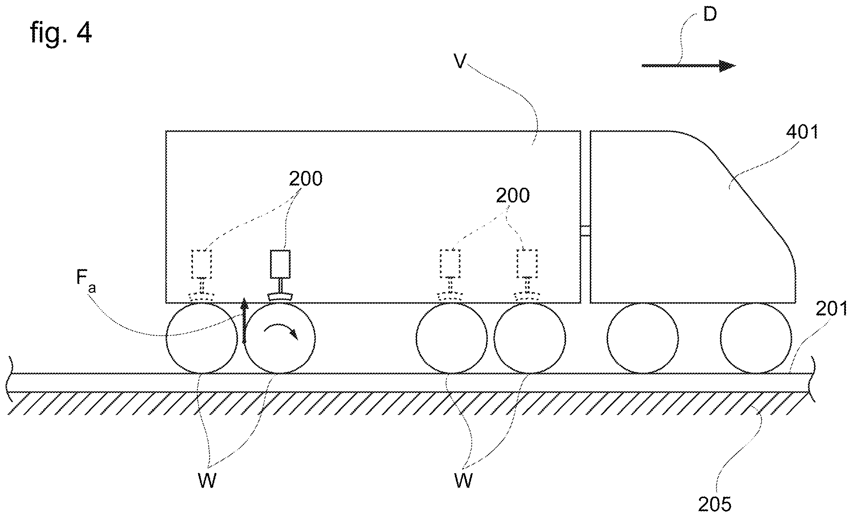

Preferably, as may be seen in Figure 3, step a) may be performed by positioning the at least one vehicle on an inclined rail. In this case, the vehicle may be moved according to a travel acceleration value generated by the effect of gravity. Or, as may be seen in Figure 4, step a) may be performed by means of a locomotion means arranged to tow said at least one vehicle along said rail according to a value of travel acceleration.

Preferably, the travel acceleration value with which the locomotion means tows the at least one vehicle along said rail may be predetermined.

In one example, the travel acceleration value may be greater than 0 when the vehicle is moving according to an accelerated motion. Or, the travel acceleration value may be substantially equal to 0 when the vehicle is moving according to a constant rectilinear motion.

For example, the at least one braking means may belong to or be associated with a pneumatic or electro-pneumatic or electromechanical or electrodynamic braking system. Therefore, some embodiments applicable for example in the case of pneumatic and/or electro-pneumatic and/or electro-mechanical and/or electrodynamic braking systems are reported below.

Preferably, the predetermined actuation signal may be a predetermined pneumatic actuation signal. Furthermore, the at least one vehicle may include a brake pipe arranged to allow the provision of the predetermined pneumatic actuation signal to the at least one braking means. In this case, step b) may include:

- imposing, in the brake pipe, the predetermined pneumatic actuation signal having a pressure value adapted to cause the braking means, when properly operating, to produce the braking force having said predetermined verification braking force value.

In other words, the predetermined pneumatic actuation signal is generated by directly modifying the braking pressure value of the brake pipe, on each wheel to which the at least one braking means is associated. The braking force generated by the at least one braking means will depend on the braking pressure value provided by the brake pipe. When the predetermined pneumatic actuation signal is present in the brake pipe, all possible braking means connected to the brake pipe will be required to generate the verification braking force.

Preferably, the at least one braking means may include, for example, a braking cylinder to which a shoe or a pad is coupled, and may be arranged to act on a wheel or on a disc, respectively. The at least one braking means may further include a "distributor" valve, an auxiliary tank, a pneumatic weighing device, a mechanical transmission system.

Preferably, the predetermined actuation signal may be a predetermined electrical actuation signal. Furthermore, the at least one vehicle may include an electrical line arranged to allow the provision of the predetermined electrical actuation signal to the at least one braking means. In this case, step b) may include:

- imposing on the electrical line the predetermined electrical actuation signal having a current or voltage value adapted to cause said braking means, when properly operating, to produce the braking force having the predetermined verification braking force value.

Preferably, the braking means may include, for example, an electromechanical assembly to which a shoe or a pad is coupled, and may be arranged to act on a wheel or on a disc, respectively. For example, the electromechanical assembly may comprise an electric motor. The electric motor may, for example, use electric energy to move a mechanical assembly, the movement of which may drive said shoe or pad.

In a further possibility, preferably, the at least one vehicle may comprise at least one local braking control means associated with the at least one braking means. Furthermore, step b) may include:

b') by means of the at least one braking control means, generating the actuation signal to said at least one braking means.

In this case, the predetermined actuation signal may again be a predetermined pneumatic actuation signal. The at least one vehicle may include a main pipe arranged to convey a braking pressure. In this case, step b') may include:

- by means of the braking control means, generating the predetermined pneumatic actuation signal to be supplied to the at least one braking means, by means of a local adjustment of a pressure value of the braking pressure supplied by the main pipe;
- providing the predetermined pneumatic actuation signal to the at least one braking means, the predetermined pneumatic actuation signal being adapted to cause said braking means, when properly operating, to produce the braking force having said predetermined verification braking force value.

In other words, for example, the value of the predetermined braking pressure provided by the main brake pipe may be maintained at a predetermined level, e.g. 8bar - 10bar, but the braking control means may locally adjust the received braking pressure value, so that the effective braking pressure value supplied to the at least one braking means is such as to impose the verification braking force Fa on at least one wheel or on at least one axle. In this way, the braking force generated on each wheel by the one or more possible braking means present may be adjusted independently.

For example, the main brake pipe and/or the general brake pipe may be included in - or associated with - the pneumatic or electro-pneumatic braking system. In the case of a pneumatic or electro-pneumatic braking system, it may be controlled, for example, by a communication bus arranged along the at least one railway vehicle or along the railway convoy, in the case of a plurality of railway vehicles. By means of such bus, for example, it will be possible to provide various braking controls to the one or more braking control means.

The methods described which are applicable to at least one braking means may for example be repeated in series until all the braking means have been tested, i.e. for all the wheels or all the axles of the vehicle.

In the described methods which are applied to a plurality of braking means, the braking force having the predetermined verification braking force value Fa may be required from a plurality of braking means. In this way, several braking means may be tested simultaneously. Or, in the methods described which are applied to several braking means, a total braking force may be required overall from a plurality of braking means. In this case, the total braking force value may be divided into respective verification braking force values Fa for the braking means. The sum of the braking force values generated by the various braking means, when operating correctly, will be equal to the total braking force value. In this way, several braking means may be tested simultaneously.

In a further aspect, the invention relates to systems for verifying the operation of at least one braking means of at least one vehicle, in particular at least one railway vehicle.

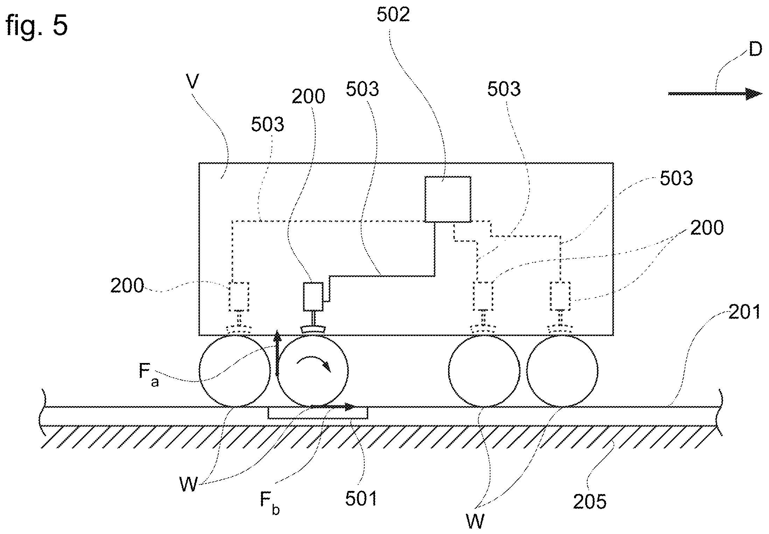

A first embodiment of a method for verifying the operation of at least one braking means of at least one vehicle, in particular at least one railway vehicle, is described below. Also for this embodiment reference may still be made to Figure 5. The at least one vehicle includes:

- at least one wheel W or at least one axle to which at least one wheel is coupled, said at least one wheel being arranged to run on a rail 201;
- at least one braking means 200 associated with said at least one wheel or associated with said at least one axle.

In this first embodiment, the system for verifying the operation of at least one braking means of at least one vehicle comprises:

- a system for measuring a friction force 501 arranged to measure a friction force value Fb exerted by the at least one wheel, at a point of contact between said rail and said at least one wheel; and
- a control means 502;

The control means is arranged for:

- providing said at least one braking means with an actuation signal 503 adapted to request said at least one braking means 200 to generate a braking force having a predetermined verification braking force value Fa on the at least one wheel or on the at least one axle;
- receiving the friction force value Fb measured by the friction force measuring system;

- converting the received friction force value Fb into an estimated braking force value;
- comparing the at least one estimated braking force value with an expected verification braking force value;
- determining that the at least one associated braking means is malfunctioning when the at least one estimated braking force value is different from said predetermined expected verification braking force value.

With reference to the first embodiment just described, preferably, the control means 502 may be arranged to determine that the at least one braking means 200 is malfunctioning when the at least one estimated braking force value differs from said predetermined expected verification braking force value by at least a predetermined tolerance value.

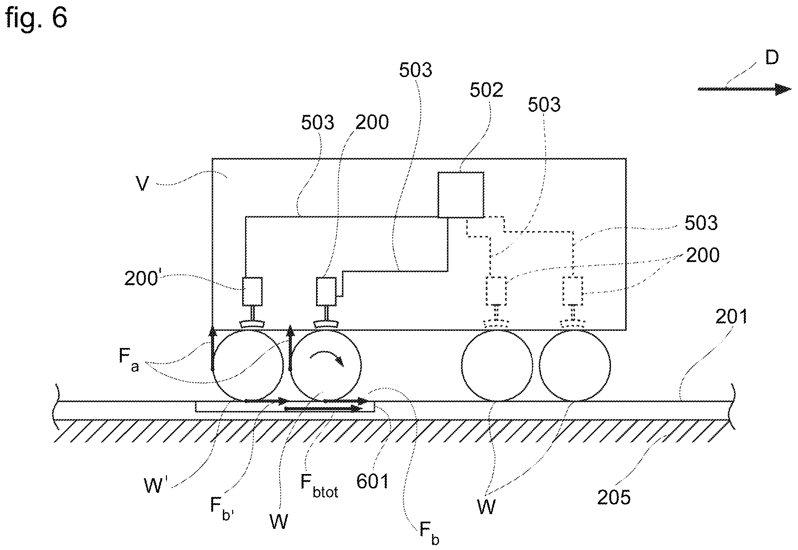

A second embodiment of a system for verifying the operation of at least one braking means of at least one vehicle, in particular at least one railway vehicle, is described below. For this embodiment, reference may be made to Figure 6. The at least one vehicle includes:

- a plurality of wheels W, W' or a plurality of axles to which respective wheels are coupled, said wheels being arranged to run on a rail;
- a plurality of braking means 200, 200', wherein each braking means of said plurality of braking means is associated with at least one of said wheels or associated with at least one of said axles.

In this second embodiment, the system for verifying the operation of at least one braking means of at least one vehicle comprises:

- a system for measuring a friction force 601 arranged to measure a total friction force value $Fb_{tot}$ exerted by the wheels on the rail; and
- a control means.

The control means is arranged for:

- providing said plurality of braking means with at least one actuation signal adapted to request said plurality of braking means to generate respective braking forces having a predetermined verification braking force value Fa on said wheels or on said axles;
- receiving the total friction force value $Fb_{tot}$ measured by the friction force measuring system;
- converting the total friction force value $Fb_{tot}$ exerted by the wheels into an estimated total braking force value;

  e) comparing the estimated total braking force value with an expected total braking force value;
  f) determining that at least one braking means of said plurality of braking means is malfunctioning when the estimated total braking force value is different from said expected verification total braking force value.

With reference to the second embodiment just described, preferably, the control means 602 may be arranged to determine that at least one braking means is malfunctioning when the estimated total braking force value differs from said expected verification total braking force value by at least a predetermined tolerance value.

A third embodiment of a system for verifying the operation of at least one braking means of at least one vehicle, in particular at least one railway vehicle, is described below. For this embodiment, reference may again be made to Figure 5. The at least one vehicle includes:

- at least one wheel W or at least one axle to which at least one wheel is coupled, said at least one wheel being arranged to run on a rail;
- at least one braking means 200 associated with said at least one wheel or associated with said at least one axle.

In this third embodiment, the system for verifying the operation of at least one braking means of at least one vehicle comprises:

- a system for measuring a friction force arranged to measure a friction force value Fb exerted by the at least one wheel of the vehicle, at the point of contact between the rail and said at least one wheel; and
- a control means.

The control means is arranged for:

- providing said at least one braking means with an actuation signal adapted to request said at least one braking means to generate a braking force having a predetermined verification braking force value Fa on the at least one wheel or on the at least one axle;
- receiving the friction force value Fb measured by the friction force measuring system;
- comparing the received friction force value Fb with an expected friction force value;
- determining that the at least one braking means is malfunctioning when the received friction force value Fb is different from said expected friction force value.

With reference to the third embodiment just described, preferably, the control means may be arranged to determine that the at least one braking means is malfunctioning when the received friction force value Fb differs from said expected friction force value by at least a predetermined tolerance value.

A fourth embodiment of a system for verifying the operation of at least one braking means of at least one vehicle, in particular at least one railway vehicle, is described below. For this embodiment, reference may again be made to Figure 6. The at least one vehicle includes:

- a plurality of wheels W, W' or a plurality of axles to which respective wheels are coupled, said wheels being arranged to run on a rail;
- a plurality of braking means, wherein each braking means of said plurality of braking means is associated with at least one of said wheels or associated with at least one of said axles.

In this fourth embodiment, the system for verifying the operation of at least one braking means of at least one vehicle comprises:

- a system for measuring a friction force 601 arranged to measure a total friction force value $Fb_{tot}$ exerted by the wheels on the rail; and
- control means 602.

The control means is arranged for:

- providing said plurality of braking means 200, 200' with at least one actuation signal adapted to request said plurality of braking means to generate respective braking forces having a predetermined verification braking force value (Fa) on said wheels or on said axles;
- receiving the total friction force value $Fb_{tot}$ measured by the friction force measuring system;

  e) comparing the received total friction force value $Fb_{tot}$ with an expected total friction force value;
  f) determining that at least one braking means of said plurality of braking means is malfunctioning when the total friction force value $Fb_{tot}$ received is different from said expected total friction force value.

With reference to the fourth embodiment just described, preferably, the control means may be arranged to determine that the at least one braking means is malfunctioning when the received total friction force value $Fb_{tot}$ differs from said expected total friction force value by at least a predetermined tolerance value.

Preferably, the system for verifying the operation of at least one braking means according to any one of the embodiments described above may comprise:

- a tilt sensor means, arranged to monitor an angle of inclination of the vehicle; and/or
- a weight sensor means, arranged to monitor a parameter associated with the mass M of the at least one vehicle; and/or
- a speed sensor means, arranged to measure a speed value of the at least one vehicle; and/or
- an inertial platform, arranged to measure both an acceleration value of the at least one vehicle and a rail inclination.

Preferably, the control means may be or comprise at least one of: a processor, a microprocessor, a controller, a microcontroller, an PLC, an FPGA, or the like.

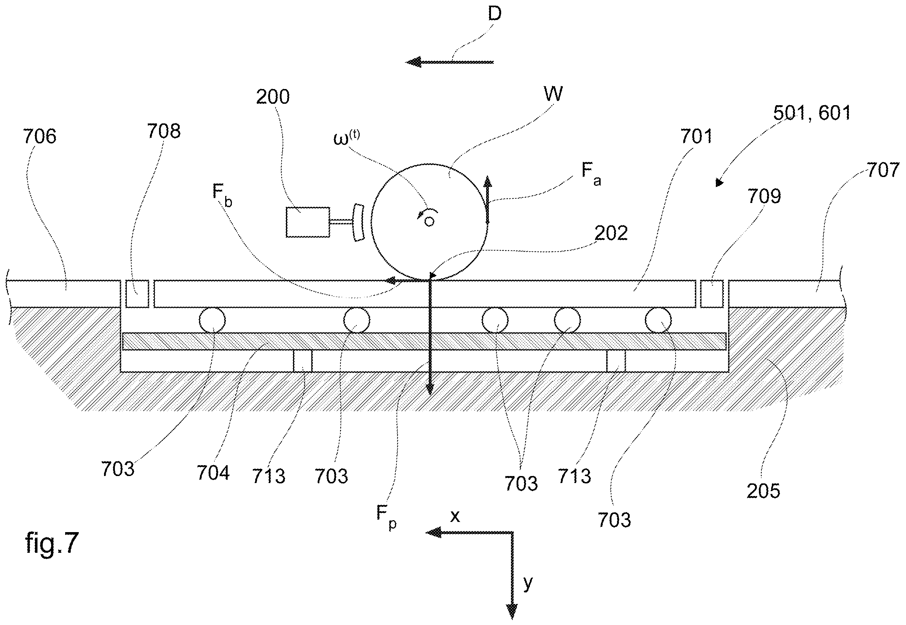

Preferably, as may be seen in Figure 7 and with reference to any embodiment of the system for verifying the operation of at least one braking means previously described, the system for measuring a friction force 501, 601 may comprise a movable rail segment 701 arranged to allow a transit in contact with said at least one wheel W in a measuring step, the transit in contact with said at least one wheel being arranged to transmit to said movable rail segment a friction force value Fb of the at least a wheel, which is a function of the effective braking force value generated on at least one wheel (the effective braking force value being equal to the required verification braking force value Fa if the at least one braking means is operating correctly).

The movable rail segment 701 is arranged to slide, according to a transit direction D of said at least one wheel, due to the friction force value Fb generated by said at least one wheel.

The system for measuring a friction force comprises at least a first force sensor means 708, arranged alongside a first end of said movable rail segment. The first force sensor means 708 is arranged with respect to the movable rail segment so that the movable rail segment 701 is arranged to push against said first force sensor means 708 when said movable rail segment moves in the transit direction D of said at least one wheel.

The first force sensor means 708 is arranged to measure a force value generated by the sliding of said movable rail segment 701 according to the transit direction of said at least one wheel.

The force value generated by the horizontal sliding of said movable rail segment 701 and measured by the first force sensor means 708 being corresponding to the friction force value Fb generated by the at least one wheel.

Preferably, the system for measuring a friction force 501, 601 may further comprise a second force sensor means 709, for example a force transducer, arranged alongside a second end of the movable rail segment 201, opposite to the first end. In this way, the system for measuring the friction force 304 may be able to measure the force generated by the sliding of the movable rail segment 201 according to both possible transit directions of the at least one wheel.

Preferably, the movable rail segment 701 may be arranged to slide on sliding means 703 arranged to be placed on a support 704. The support may be arranged to be below the movable rail segment and constrained to a ground 205.

Preferably, the horizontal movement of the movable rail segment 701 may be limited in the two directions along the axis X by two rails 706, 707 integral with the ground reference 205.

Preferably, the support 204 may be arranged to transmit a vertex force Fp gravitating on it to at least one weight force sensor means 713, for example but not exclusively a force transducer or a load cell.

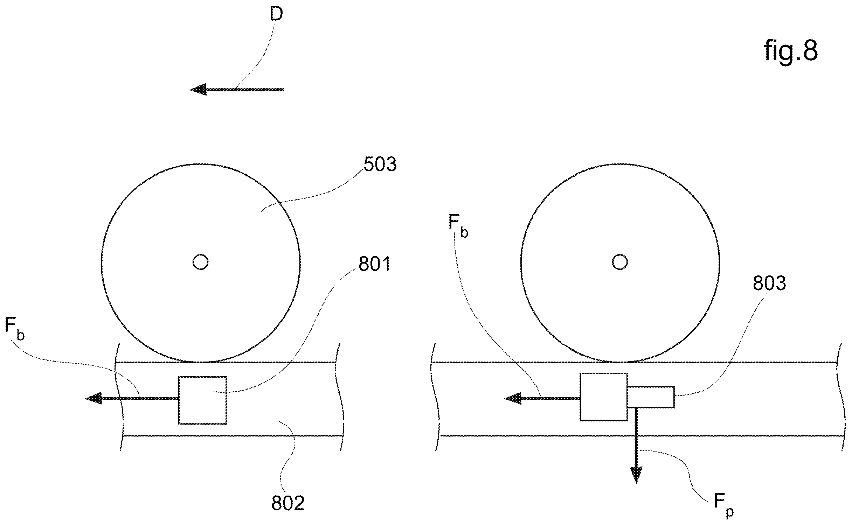

Or, as may be seen in Figure 8, in an alternative embodiment, the system for measuring a friction force 501, 601 may comprise at least a first strain gauge sensor means 801 arranged to be constrained to one side of the rail 802. The first strain gauge sensor means 801 is arranged to be oriented so as to measure the friction force value Fb generated by the at least one wheel according to a first transit direction D of said at least one wheel or a second transit direction of said at least one wheel, opposite to said first transit direction D of said at least one wheel.

Preferably, the system for measuring a friction force 501, 601 may further comprise a second strain gauge sensor means 803 arranged to be constrained to one side of the rail, adjacent to said first strain gauge sensor means. The second strain gauge sensor means 803 may therefore be arranged to be oriented so as to measure a weight force Fp acting on the rail.

The first and second strain gauge sensor means may each be a strain gauge sensor or a strain gauge.

In other words, the first and second strain gauge means may functionally replace the first force sensor means and the second force sensor means and the at least one weight force sensor means, respectively.

Given the low cost of the latter solution, several strain gauge sensor means may be installed along the rail 502 along the measurement area in order to be able to perform the measurement simultaneously on several wheels and accelerate the measurement process.

One of the various possible embodiments is shown below.

Two force sensor means, e.g. a first and a second force sensor means, for example but not exclusively two load cells, measure the force exerted by the movable rail segment 701 in its possible horizontal movement along the axis X, respectively on the rail, on the left in the figure, and on the rail, on the right in the figure.

During the vehicle braking step, at least one braking means including a braking cylinder and the shoe exerts a braking force on the wheel at the equivalent point.

Depending on the direction of the wheel, in the case of $\omega(t)=0$ one between the first and the second force transducer will measure the friction force FB corresponding to the braking force exerted by the shoe on the wheel at the equivalent point.

Generally, for example, a braking system for freight transport railway convoys, according to the prior art, consists of a main brake pipe whose pressure is controlled by a locomotive towed by one or more railway vehicles.

The main brake pipe supplies a device known as a "distributor" valve and an auxiliary tank, not shown in the figure. The "distributor" valve generates a braking pressure as a function of the pressure present in the main brake pipe, following a transfer function known to those skilled in the art.

A pneumatic weighing device receives the braking pressure generated by the "distributor" valve and a weight information. The weight information being for example, but not exclusively, a pressure indicative of the weight of the carriage or railway vehicle to which the wheel belongs. The weight information further being, for example but not exclusively, the position of a manually operated indicator which indicates the weight of the carriage or railway vehicle to which the wheel belongs.

A pneumatic weighing device generates a weighted braking pressure as a function of the braking pressure and the weight information.

The braking force is a function of the weighted braking pressure, the dimensions of the braking cylinder, the mechanical transmission system, the friction coefficient between the shoe and the wheel.

Knowing the pressure in the main brake pipe, the measurement of the friction force Fb by one of the force sensor means, is therefore indicative of the state of the braking chain consisting of the "distributor" valve, the pneumatic weighing device, the mechanical transmission system, the shoe, the friction coefficient between the shoe and the wheel.

If the support is free to slide vertically along the Cartesian axis Y, and rests on the at least one weight force sensor means, for example, but not exclusively load cells, a weight force transducer reads the weight force Fp exerted by the wheel on the movable rail segment.

The advantage achieved is therefore that of having provided solutions which allow a possible malfunction of at least one braking means of at least one vehicle to be determined, which are effective and which do not involve high costs as regards both the hardware components and the installation and update costs of a possible complete fleet.

A further advantage is that of having provided solutions which do not involve onerous development and certification costs.

Several aspects and embodiments of methods for verifying the operation of at least one braking means of at least one vehicle and systems for verifying the operation of at least one braking means of at least one vehicle according to the invention have been described. It is understood that the invention is not limited to the embodiments described, but may be varied within the scope defined by the appended claims.

**Claims**

1. Method for verifying the operation of at least one braking means of at least one vehicle, particularly at least one railway vehicle, wherein said at least one vehicle comprises

- at least one wheel or at least one axle to which at least one wheel is coupled, said at least one wheel being arranged to run on a rail;
- at least one braking means associated with said at least one wheel or associated with said at least one axle;

said method for verifying the operation of said at least one braking means comprising the steps of:

a) moving said at least one vehicle along said rail;

b) providing said at least one braking means with a predetermined actuation signal adapted to request said at least one braking means to generate a braking force having a predetermined verification braking force value (Fa) on the at least one wheel or on the at least one axle;

c) when said at least one braking means is required to generate a braking force having a predetermined verification braking force value (Fa) on the at least one wheel or on the at least one axle, measuring at least one friction force value exerted by the at least one wheel on the rail at a point of contact between said rail and said at least one wheel, the friction force value (Fb) being caused by an actual braking force generated by the at least one braking means in response to the received actuation signal;

d) converting the measured friction force value (Fb) into an estimated braking force value;

e) comparing the at least one estimated braking force value with said predetermined verification braking force value (Fa);

f) determining that the at least one braking means is malfunctioning when the at least one estimated braking force value is different from said predetermined verification braking force value (Fa).

2. Method for verifying the operation of the at least one braking means according to claim 1, wherein said step f) comprises:

f') verifying whether said estimated braking force value differs from said verification braking force value (Fa) by at least a predetermined tolerance value;

f'') determining that the at least one braking means is malfunctioning, if it has been verified that said estimated braking force value differs from said verification braking force value (Fa) by at least said predetermined tolerance value.

3. Method for verifying the operation of at least one braking means of at least one vehicle, particularly at least one railway vehicle, wherein said at least one vehicle includes:

- a plurality of wheels or a plurality of axles to which respective wheels are coupled, said wheels being arranged to run on a rail;
- a plurality of braking means, wherein each braking means of said plurality of braking means is associated with at least one of said wheels or associated with at least one of said axles;

said method for verifying the operation of said at least one braking means comprising the steps of:

a) moving said at least one vehicle along the rail;

b) providing said braking means with at least one predetermined actuation signal adapted to request said braking means to generate respective braking forces having a predetermined verification braking force value (Fa) on said wheels or said axles;

c) when such braking means are required to generate the respective braking forces having a predetermined verification braking force value (Fa) on the wheels or axles, measuring at least one total friction force value ($Fb_{tot}$) generated on the rail by the sum of the respective friction force values (Fb) exerted by the wheels at the respective points of contact between said rail and said wheels, the respective friction force values (Fb) being generated by respective effective braking forces generated by the braking means in response to the at least one received actuation signal;

d) converting the total friction force value ($Fb_{tot}$) exerted by the wheels into an estimated total braking force value;

e) comparing the at least one estimated total braking force value with an expected verification total braking force value;

f) determining that at least one braking means of said plurality of braking means is malfunctioning when the estimated total braking force value is different from the expected verification total braking force value.

4. Method for verifying the operation of at least one braking means according to claim 3, wherein said step f) comprises:

f') verifying whether said estimated total braking force value differs from said expected verification total braking force value by at least a predetermined tolerance value;

f'') determining that the at least one braking means is malfunctioning, if it has been verified that said estimated total braking force value differs from said expected verification total braking force value by at least said predetermined tolerance value.

5. Method for verifying the operation of at least one braking means of at least one vehicle, particularly at least one railway vehicle, wherein said at least one vehicle includes:

- at least one wheel or at least one axle to which at least one wheel is coupled, said at least one wheel being arranged to run on a rail;
- at least one braking means associated with said at least one wheel or associated with said at least one axle;

said method for verifying the operation of said at least one braking means comprising the steps of:

a) moving said at least one vehicle along the rail;
b) providing said at least one braking means with a predetermined actuation signal adapted to request said at least one braking means to generate a braking force having a predetermined verification braking force value (Fa) on the at least one wheel or on the at least one axle;
c) when at least one braking means is required to generate a braking force having a predetermined verification braking force value (Fa) on the at least one wheel or on the at least one axle, measuring at least one friction force value (Fb) exerted by the at least one wheel on the rail at a point of contact between said rail and said at least one wheel, the friction force value (Fb) being generated by an actual braking force generated by the at least one braking means in response to the received actuation signal;
d) comparing the measured at least one friction force value (Fb) with an expected friction force value;
e) determining that the at least one braking means is malfunctioning when said at least one measured friction force value (Fb) differs from said expected friction force value.

6. Method for verifying the operation of at least one braking means according to claim 5, wherein said step e) comprises:

e') verifying whether said friction force value (Fb) differs from said expected friction force value by at least a predetermined tolerance value;
e") determining that the at least one braking means is malfunctioning, if it has been verified that said friction force value (Fb) differs from said expected friction force value by at least said predetermined tolerance value.

7. Method for verifying the operation of at least one braking means of at least one vehicle, particularly at least one railway vehicle, wherein said at least one vehicle comprises

- a plurality of wheels or a plurality of axles to which respective wheels are coupled, said wheels being arranged to run on a rail;
- a plurality of braking means, wherein each braking means of said plurality of braking means is associated with at least one of said wheels or associated with at least one of said axles;

said method for verifying the operation of said at least one braking means comprising the steps of:

a) moving said at least one vehicle along the rail;
b) providing said braking means with at least one predetermined actuation signal adapted to request said braking means to generate respective braking forces having a predetermined verification braking force value (Fa) on the wheels or axles;
c) when the braking means are required to generate respective braking forces having the predetermined verification braking force value (Fa) on the wheels or axles, measuring at least a total friction force value ($Fb_{tot}$) generated on the rail by the sum of the respective friction force values (Fb) exerted by the wheels at respective points of contact between said rail and said wheels, the respective friction force values (Fb) being generated by respective effective braking forces generated by the braking means in response to the at least one received actuation signal;
d) comparing the total friction force value ($Fb_{tot}$) with an expected total friction force value;
e) determining that at least one braking means of said plurality of braking means is malfunctioning when the total friction force value ($Fb_{tot}$) differs from the expected total friction force value.

8. Method for verifying the operation of at least one braking means according to any one of the preceding claims, wherein step a) is performed by positioning said at least one vehicle on an inclined rail; wherein the vehicle is moved according to a value of travel acceleration generated by the effect of gravity;
or,
wherein said step a) is performed by means of a locomotion means arranged to tow said at least one vehicle along said rail according to a value of travel acceleration.

9. Method for verifying the operation of at least one braking means according to any one of the preceding claims,

wherein said predetermined actuation signal is a predetermined pneumatic actuation signal;
wherein, said at least one vehicle comprises a brake pipe adapted to allow the provision of said predetermined pneumatic actuation signal to the at least one braking means or the plurality of braking means;

wherein said step b) comprises:

imposing, in said brake pipe, the predetermined pneumatic actuation signal having a pressure value adapted to cause said braking means, when properly operating, to produce the braking force having said predetermined verification braking force value (Fa).

10. Method for verifying the operation of at least one braking means according to any one of claims 1 to 8, wherein said predetermined actuation signal is a predetermined electrical actuation signal;

wherein, said at least one vehicle comprises an electrical line arranged to enable the provision of said predetermined electrical actuation signal to the at least one braking means or to the plurality of braking means;

wherein said step b) comprises:

- imposing on said electrical line the predetermined electrical actuation signal having a current or voltage value adapted to cause said braking means, when properly operating, to produce the braking force having said predetermined verification braking force value (Fa).

11. Method for verifying the operation of at least one braking means according to any one of claims 1 to 8, wherein, said at least one vehicle comprises at least one local braking control means associated with said at least one braking means or said plurality of braking means;

wherein said step b) comprises:

b') by means of said at least one local braking control means, generating the actuation signal.

12. System for verifying the operation of at least one braking means of at least one vehicle, particularly at least one railway vehicle, wherein said at least one vehicle comprises:

- at least one wheel or at least one axle to which at least one wheel is coupled, said at least one wheel being arranged to run on a rail;
- at least one braking means associated with said at least one wheel or associated with said at least one axle;

said system for verifying the operation of at least one braking means of at least one vehicle comprising:

- a system for measuring a friction force arranged to measure a friction force value

(Fb) exerted by the at least one wheel, at a point of contact between said rail and said at least one wheel; and
- a control means;

said control means being arranged for:

- providing said at least one braking means with an actuation signal adapted to request said at least one braking means to generate a braking force having a predetermined verification braking force value (Fa) on the at least one wheel or on the at least one axle;
- receiving the friction force value (Fb) measured by the friction force measuring system;
- converting the received friction force value (Fb) into an estimated braking force value;
- comparing the at least one estimated braking force value with an expected verification braking force value;
- determining that the at least one associated braking means is malfunctioning when the at least one estimated braking force value is different from said predetermined expected verification braking force value.

13. System for verifying the operation of at least one braking means of at least one vehicle, particularly at least one railway vehicle, wherein said at least one vehicle comprises:

- a plurality of wheels or a plurality of axles to which respective wheels are coupled, said wheels being arranged to run on a rail;
- a plurality of braking means, wherein each braking means of said plurality of braking means is associated with at least one of said wheels or associated with at least one of said axles;

said system for verifying the operation of at least one braking means of at least one vehicle comprising:

- a system for measuring a friction force arranged to measure a total friction force value (Fb$_{tot}$) exerted by the wheels on the rail; and
- a control means;

said control means being arranged for:

- providing said plurality of braking means with at least one actuation signal adapted to request said plurality of braking means to generate respective braking forces having a predetermined verification braking force value (Fa) on said wheels or on said axles;
- receiving the total friction force value ($Fb_{tot}$) measured by the friction force measuring system;
- converting the total friction force value ($Fb_{tot}$) exerted by the wheels into an estimated total braking force value;
- comparing the estimated total braking force value with an expected total braking force value;
- determining that at least one braking means of said plurality of braking means is malfunctioning when the estimated total braking force value is different from said expected total verification braking force value.

14. System for verifying the operation of at least one braking means of at least one vehicle, particularly at least one railway vehicle, wherein said at least one vehicle comprises:

- at least one wheel or at least one axle to which at least one wheel is coupled, said at least one wheel being arranged to run on a rail;
- at least one braking means associated with said at least one wheel or associated with said at least one axle;
said system for verifying the operation of at least one braking means of at least one vehicle comprising:

- a system for measuring a friction force arranged to measure a friction force value (Fb) exerted by the at least one wheel of the vehicle, at the point of contact between the rail and said at least one wheel; and
- a control means;

said control means being arranged for:

- providing said at least one braking means with an actuation signal adapted to request said at least one braking means to generate a braking force having a predetermined verification braking force value (Fa) on the at least one wheel or on the at least one axle;
- receiving the friction force value (Fb) measured by the friction force measuring system;
- comparing the received friction force value (Fb) with an expected friction force value;
- determining that the at least one braking means is malfunctioning when the received friction force value (Fb) is different from said expected friction force value.

15. System for verifying the operation of at least one braking means of at least one vehicle, particularly at least one railway vehicle, wherein said at least one vehicle comprises:

- a plurality of wheels or a plurality of axles to which respective wheels are coupled, said wheels being arranged to run on a rail;
- a plurality of braking means, wherein each braking means of said plurality of braking means is associated with at least one of said wheels or associated with at least one of said axles;
said system for verifying the operation of at least one braking means of at least one vehicle comprising:

- a system for measuring a friction force arranged to measure a total friction force value ($Fb_{tot}$) exerted by the wheels on the rail; and
- a control means;

said control means being arranged for:

- providing said plurality of braking means with at least one actuation signal adapted to request said plurality of braking means to generate respective braking forces having a predetermined verification braking force value (Fa) on said wheels or on said axles;
- receiving the total friction force value ($Fb_{tot}$) measured by the friction force measuring system;
- comparing the received total friction force value ($Fb_{tot}$) with an expected total friction force value;
- determining that at least one braking means of said plurality of braking means is malfunctioning when the total friction force value ($Fb_{tot}$) received is different from said expected total friction force value.

**Patentansprüche**

1. Verfahren zur Überprüfung der Funktion mindestens einer Bremsvorrichtung mindestens eines Fahrzeugs, insbesondere eines Schienenfahrzeugs, wobei das mindestens eine Fahrzeug umfasst

- mindestens ein Rad oder mindestens eine Achse, an der mindestens ein Rad gekoppelt ist, wobei das mindestens eine Rad zum Fahren auf einer Schiene eingerichtet ist;
- mindestens ein Bremsmittel, das dem mindestens einen Rad oder der mindestens einen Achse zugeordnet ist;
- wobei das Verfahren zur Überprüfung der Funktion der mindestens einer Bremsvorrichtung die folgenden Schritte umfasst:

a) Bewegen des mindestens einen Fahrzeugs entlang der Schiene;

- b) Versehen der vorgegebenen Bremsvorrichtung mit einem vorbestimmten Betätigungssignals, das eingerichtet ist, der mindestens einen Bremsvorrichtung anzufordern, eine Bremskraft aufweisend einen vorbestimmten Überprüfung-Bremskraftwert (Fa) an dem mindestens einen Rad oder an der mindestens einen Achse zu erzeugen;

c) wenn man der mindestens einen Bremsvorrichtung angefordert wird, eine Bremskraft aufweisend einen vorbestimmten Überprüfung-Bremskraftwert (Fa) an dem mindestens einen Rad oder an der mindestens einen Achse zu erzeugen, Messen mindestens eines Reibkraftwerts, der von dem mindestens einen Rad auf die Schiene an der Kontaktstelle zwischen der Schiene und dem mindestens einen Rad ausgeübt wird, wobei der Reibkraftwert (Fb) durch eine tatsächliche Bremskraft verursacht wird, die durch die mindestens einen Bremsvorrichtung als Reaktion auf das empfangene Betätigungssignal erzeugt wird;

d) Umwandeln des gemessenen Reibkraftwerts (Fb) in einen geschätzten Bremskraftwert;

e) Vergleichen des mindestens einen geschätzten Bremskraftwerts mit dem vorbestimmten Überprüfung-Bremskraftwert (Fa);

f) Bestimmen, dass die mindestens eine Bremsvorrichtung fehlerhaft arbeitet, wenn der mindestens eine geschätzte Bremskraftwert von dem vorbestimmten Überprüfung-Bremskraftwert (Fa) verschieden ist.

2. Verfahren zur Überprüfung der Funktion mindestens einer Bremsvorrichtung nach Anspruch 1, wobei der Schritt f) umfasst:

f) Überprüfen, ob sich der geschätzte Bremskraftwert von dem Überprüfung-Bremskraftwert (Fa) um mindestens einen vorbestimmten Toleranzwert unterscheidet;

f') Bestimmen, dass die mindestens eine Bremsvorrichtung fehlerhaft arbeitet, wenn man überprüft wurde, dass sich der geschätzte Bremskraftwert von dem Überprüfung-Bremskraftwert (Fa) um mindestens den vorbestimmten Toleranzwert unterscheidet.

3. Verfahren zur Überprüfung der Funktion mindestens einer Bremsvorrichtung mindestens eines Fahrzeugs, insbesondere mindestens eines Schienenfahrzeugs, wobei das mindestens eine Fahrzeug umfasst:

- eine Mehrzahl von Rädern oder eine Mehrzahl von Achsen, an denen jeweilige Räder gekoppelt sind, wobei die Räder zum Fahren auf einer Schiene eingerichtet sind;

- eine Mehrzahl von Bremsvorrichtungen, wobei jede Bremsvorrichtung der Mehrzahl von Bremsvorrichtungen mindestens einem der Räder oder mindestens einer der Achsen zugeordnet ist;

- wobei das Verfahren zur Überprüfung der Funktion mindestens einer Bremsvorrichtung die folgenden Schritte umfasst:

a) Bewegen des mindestens einen Fahrzeugs entlang der Schiene;

b) Versehen der Bremsvorrichtung mit mindestens einem vorbestimmten Betätigungssignal, das eingerichtet ist, der Bremsvorrichtung anzufordern, jeweilige Bremskräfte aufweisend einen vorbestimmten Überprüfung-Bremskraftwert (Fa) an den Rädern oder den Achsen zu erzeugen;

c) wenn man der Bremsvorrichtung angefordert wird, jeweilige Bremskräfte mit dem vorbestimmten Überprüfungs-Bremskraftwert (Fa) an den Rädern oder den Achsen zu erzeugen, Messen mindestens eines Gesamtreibkraftwerts ($Fb_{tot}$), der auf die Schiene durch die Summe der jeweiligen Reibkraftwerte (Fb) erzeugt wird, die durch die Räder an den jeweiligen Kontaktstellen zwischen der Schiene und den Rädern ausgeübt werden, wobei die jeweiligen Reibkraftwerte (Fb) durch jeweilige tatsächliche Bremskräfte erzeugt werden, die durch die Bremsvorrichtung als Reaktion auf das mindestens eine empfangene Betätigungssignal erzeugt werden;

d) Umwandeln des Gesamtreibkraftwerts ($Fb_{tot}$), der durch die Rädern ausgeübt wird, in einen geschätzten Gesamtbremskraftwert;

e) Vergleichen des mindestens einen geschätzten Gesamtbremskraftwerts mit einem erwarteten Überprüfung-Gesamtbremskraftwert;

f) Bestimmen, dass mindestens eine Bremsvorrichtung der Mehrzahl von Bremsvorrichtungen fehlerhaft arbeitet, wenn der geschätzte Gesamtbremskraftwert von dem erwarteten Überprüfungs-Gesamtbremskraftwert verschieden ist.

4. Verfahren zur Überprüfung der Funktion mindestens einer Bremsvorrichtung nach Anspruch 3, wobei der Schritt f) umfasst:

f) Überprüfen, ob sich der geschätzte Gesamtbremskraftwert von dem erwarteten Überprüfungs-Gesamtbremskraftwert um mindestens einen vorbestimmten Toleranzwert unterscheidet;

f') Bestimmen, dass mindestens eine Bremsvorrichtung fehlerhaft arbeitet, wenn man überprüft wurde, dass sich der geschätzte Gesamtbremskraftwert von dem erwarteten Überprüfungs-Gesamtbremskraftwert um mindestens den vorbestimmten Toleranzwert unterscheidet.

5. Verfahren zur Überprüfung der Funktion mindestens einer Bremsvorrichtung mindestens eines Fahrzeugs, insbesondere mindestens eines Schienenfahrzeugs, wobei das mindestens eine Fahrzeug umfasst:

- mindestens ein Rad oder mindestens eine Achse, an der mindestens ein Rad gekoppelt ist, wobei das mindestens ein Rad zum Fahren auf eine Schiene eingerichtet ist;
- mindestens eine Bremsvorrichtung, die dem mindestens einen Rad oder der mindestens einen Achse zugeordnet ist;
- wobei das Verfahren zur Überprüfung der Funktion mindestens einer Bremsvorrichtung die folgenden Schritte umfasst:

a) Bewegen des mindestens einen Fahrzeugs entlang der Schiene

b) Versehen der mindestens eine Bremsvorrichtung mit einem vorbestimmten Betätigungssignals, das eingerichtet ist, der mindestens einen Bremsvorrichtung anzufordern, eine Bremskraft aufweisend einen vorbestimmten Überprüfung-Bremskraftwert (Fa) an dem mindestens einen Rad oder der mindestens einen Achse zu erzeugen;

c) wenn man der mindestens einen Bremsvorrichtung angefordert wird, eine Bremskraft aufweisend einen vorbestimmten Überprüfung-Bremskraftwert (Fa) an dem mindestens einen Rad oder der mindestens einen Achse zu erzeugen, Messen mindestens eines Reibkraftwerts (Fb), der durch den mindestens einen Rad auf die Schiene an der Kontaktstelle zwischen der Schiene und dem mindestens einen Rad ausgeübt wird, wobei der Reibkraftwert (Fb) durch eine tatsächliche Bremskraft erzeugt wird, die durch die Bremsvorrichtung als Reaktion auf das empfangene Betätigungssignal erzeugt wird;

d) Vergleichen des mindestens einen gemessenen Reibkraftwerts (Fb) mit einem erwarteten Reibkraftwert;

e) Bestimmen, dass die mindestens eine Bremsvorrichtung fehlerhaft arbeitet, wenn sich der mindestens eine gemessene Reibkraftwert (Fb) von dem erwarteten Reibkraftwert unterscheidet.

6. Verfahren zur Überprüfung der Funktion mindestens einer Bremsvorrichtung nach Anspruch 5, wobei der Schritt e) umfasst:

e') Überprüfen, ob sich der Reibkraftwert (Fb) von dem erwarteten Reibkraftwert um mindestens einen vorbestimmten Toleranzwert unterscheidet;

e") Bestimmen, dass die mindestens eine Bremsvorrichtung fehlerhaft arbeitet, wenn man überprüft wurde, dass sich der Reibkraftwert (Fb) von dem erwarteten Reibkraftwert um mindestens den vorbestimmten Toleranzwert unterscheidet.

7. Verfahren zur Überprüfung der Funktion mindestens einer Bremsvorrichtung mindestens eines Fahrzeugs, insbesondere mindestens eines Schienenfahrzeugs, wobei das mindestens eine Fahrzeug umfasst:

- eine Mehrzahl von Rädern oder eine Mehrzahl von Achsen, an denen jeweilige Räder gekoppelt sind, wobei die Räder zum Fahren auf einer Schiene eingerichtet sind;
- eine Mehrzahl von Bremsvorrichtungen, wobei jede Bremsvorrichtung mindestens einem der Räder oder mindestens einer der Achsen zugeordnet ist;

wobei das Verfahren zur Überprüfung der Funktion mindestens einer Bremsvorrichtung die folgenden Schritte umfasst:

a) Bewegen des mindestens einen Fahrzeugs entlang der Schiene;

b) Versehen der Bremsvorrichtung mit mindestens einem vorbestimmten Betätigungssignal, das eingerichtet ist, der Bremsvorrichtung anzufordern, jeweilige Bremskräfte aufweisend einen vorgegebenen Überprüfung-Bremskraftwert (Fa) an den Rädern oder Achsen zu erzeugen;

c) wenn man der Bremsvorrichtung angefordert wird, jeweilige Bremskräfte aufweisend den vorgegebenen Überprüfung-Bremskraftwert (Fa) an den Rädern oder Achsen zu erzeugen, Messen mindestens eines Gesamtreibkraftwerts ($Fb_{tot}$), der auf die Schiene durch die Summe der jeweiligen Reibkraftwerte (Fb) erzeugt wird, die durch die Rädern an den jeweiligen Kontaktstellen zwischen der Schiene und den Rädern ausgeübt werden, wobei die jeweiligen Reibkraftwerte (Fb) durch jeweilige tatsächliche Bremskräfte erzeugt werden, die durch die Bremsvorrichtung als Reaktion auf das mindestens eine empfangene Betätigungssignal erzeugt werden;

d) Vergleichen des Gesamtreibkraftwerts ($Fb_{tot}$) mit einem erwarteten Reibkraftwert;

e) Bestimmen, dass mindestens eine Bremsvorrichtung fehlerhaft arbeitet, wenn sich der Gesamtreibkraftwert ($Fb_{tot}$) von dem erwarteten Gesamt-Reibkraftwert unterscheidet.

8. Verfahren zur Überprüfung der Funktion mindestens einer Bremsvorrichtung nach einem der vorhergehenden Ansprüche, wobei Schritt a) durchgeführt wird, indem das mindestens eine Fahrzeug auf einer geneigten Schiene positioniert wird; wobei das Fahrzeug nach einem Fahrbeschleunigungswert bewegt wird, der durch die Schwerkraftwirkung erzeugt wird; oder,

wobei Schritt a) mittels eines Transportmittels durchgeführt wird, das eingerichtet ist, mindestens ein Fahrzeug entlang der Schiene nach einem Fahrbeschleunigungswert zu schleppen.

9. Verfahren zur Überprüfung der Funktion mindestens einer Bremsvorrichtung nach einem der vorhergehenden Ansprüche,

wobei das vorbestimmte Betätigungssignal ein vorbestimmten pneumatisches Betätigungssignal ist;

wobei das mindestens eine Fahrzeug eine Bremsleitung umfasst, die eingerichtet ist, die Bereitstellung des vorbestimmten pneumatischen Betätigungssignals an die mindestens eine Bremsvorrichtung oder die Mehrzahl der Bremsvorrichtungen zu ermöglichen; wobei Schritt b) umfasst:

Anwenden, in der Bremsleitung, des vorbestimmten pneumatischen Betätigungssignals aufweisend einen Druckwert, der eingerichtet ist, die Bremsvorrichtung, wenn sie ordnungsgemäß arbeitet, zu veranlassen, die Bremskraft mit dem vorbestimmten Überprüfung-Bremskraftwert (Fa) zu erzeugen.

10. Verfahren zur Überprüfung der Funktion mindestens einer Bremsvorrichtung nach einem der Ansprüche 1 bis 8, wobei das vorbestimmte Betätigungssignal ein vorbestimmtes elektrisches Betätigungssignal ist;

wobei das mindestens eine Fahrzeug eine elektrische Leitung umfasst, die eingerichtet ist, die Bereitstellung des vorbestimmten elektrischen Betätigungssignals an die mindestens eine Bremsvorrichtung oder an die Mehrzahl der Bremsvorrichtungen zu ermöglichen; wobei Schritt b) umfasst:

- Anwenden auf die elektrische Leitung des vorbestimmten elektrischen Betätigungssignals aufweisend einen Strom- oder Spannungswert, der eingerichtet ist, die Bremsvorrichtung, wenn sie ordnungsgemäß arbeitet, zu veranlassen, die Bremskraft aufweisend den vorbestimmten Überprüfung-Bremskraftwert (Fa) zu erzeugen.

11. Verfahren zur Überprüfung der Funktion mindestens einer Bremsvorrichtung nach einem der Ansprüche 1 bis 8, wobei das mindestens eine Fahrzeug mindestens ein lokales Bremssteuermittel umfasst, das der mindestens eine Bremsvorrichtung oder der Mehrzahl der Bremsvorrichtungen zugeordnet ist; wobei Schritt b) umfasst:

b') Erzeugen des Betätigungssignals mittels des mindestens einen lokalen Bremssteuermittels.

12. System zur Überprüfung der Funktion mindestens einer Bremsvorrichtung mindestens eines Fahrzeugs, insbesondere mindestens eines Schienenfahrzeugs, wobei das mindestens eine Fahrzeug umfasst:

- mindestens ein Rad oder mindestens eine Achse, an der mindestens ein Rad gekoppelt ist, wobei das mindestens eine Rad zum Fahren auf einer Schiene eingerichtet ist;
- mindestens eine Bremsvorrichtung, die dem mindestens einen Rad oder der mindestens einen Achse zugeordnet ist;

wobei das System zur Überprüfung der Funktion mindestens einer Bremsvorrichtung umfasst:

- ein System zum Messen einer Reibkraft, das eingerichtet ist, einen Reibkraftwert (Fb) zu messen, der durch mindestens einen Rad an einer Kontaktstelle zwischen der Schiene und dem mindestens einen Rad ausgeübt wird; und
- ein Steuermittel;
- wobei das Steuermittel eingerichtet ist, um:
- die mindestens eine Bremsvorrichtung mit einem Betätigungssignal zu versehen, das eingerichtet ist, der mindestens einen Bremsvorrichtung anzufordern, eine Bremskraft aufweisend einen vorbestimmten Überprüfung-Bremskraftwert (Fa) an dem mindestens einen Rad oder der mindestens einen Achse zu erzeugen;
- den Reibkraftwert (Fb), der durch das Reibkraftmesssystem gemessen wird, zu empfangen;
- den empfangenen Reibkraftwert (Fb) in einen geschätzten Bremskraftwert umzuwandeln;

- den mindestens einen geschätzten Bremskraftwert mit einem erwarteten Überprüfung-Bremskraftwert zu vergleichen;
- zu bestimmen, dass die mindestens eine zugeordnete Bremsvorrichtung fehlerhaft arbeitet, wenn der mindestens eine geschätzte Bremskraftwert von dem vorbestimmten erwarteten Überprüfung-Bremskraftwert verschieden ist.

13. System zur Überprüfung der Funktion mindestens einer Bremsvorrichtung mindestens eines Fahrzeugs, insbesondere mindestens eines Schienenfahrzeugs, wobei das mindestens eine Fahrzeug umfasst:

- eine Mehrzahl von Rädern oder eine Mehrzahl von Achsen, an denen jeweilige Räder gekoppelt sind, wobei die Räder zum Fahren auf einer Schiene eingerichtet sind;
- eine Mehrzahl von Bremsvorrichtungen, wobei jede Bremsvorrichtung mindestens einem der Räder oder mindestens einer der Achsen zugeordnet ist;

wobei das System zur Überprüfung der Funktion mindestens einer Bremsvorrichtung umfasst:

- ein System zum Messen einer Reibkraft, das eingerichtet ist, einen Gesamtreibkraftwert ($Fb_{tot}$) zu messen, der von den Rädern auf die Schiene ausgeübt wird; und
- ein Steuermittel;
- wobei das Steuermittel dazu eingerichtet ist, um:
- die Mehrzahl der Bremsvorrichtungen mit mindestens einem Betätigungssignal zu versehen, das eingerichtet ist, jeweilige Bremskräfte aufweisend eine vorbestimmten Überprüfung-Bremskraftwert (Fa) an den Rädern oder Achsen zu erzeugen;
- den Gesamtreibkraftwerk ($F_{tot}$), der durch das Reibkraftmesssystem gemessen wird, zu empfangen;
- den Gesamtreibkraftwert ($Fb_{tot}$), der durch die Räder ausgeübt wird, in einen geschätzten Gesamtbremskraftwert umzuwandeln;
- den geschätzten Gesamtbremskraftwert mit einem erwarteten Gesamtbremskraftwert zu vergleichen;
- zu bestimmen, dass mindestens eine Bremsvorrichtung der Mehrzahl der Bremsvorrichtungen fehlerhaft arbeitet, wenn der geschätzte Gesamtbremskraftwert von dem erwarteten Überprüfung-Bremskraftwert verschieden ist.

14. System zur Überprüfung der Funktion mindestens einer Bremsvorrichtung mindestens eines Fahrzeugs, insbesondere mindestens eines Schienenfahrzeugs, wobei das mindestens eine Fahrzeug umfasst:

- mindestens ein Rad oder mindestens eine Achse, an der mindestens ein Rad gekoppelt ist, wobei das mindestens eine Rad zum Fahren auf einer Schiene eingerichtet ist;
- mindestens eine Bremsvorrichtung, die dem mindestens einen Rad oder der mindestens einen Achse zugeordnet ist;
wobei das System zur Überprüfung der Funktion mindestens einer Bremsvorrichtung umfasst:

- ein System zum Messen einer Reibkraft, das eingerichtet ist, einen Reibkraftwert (Fb) zu messen, der durch mindestens ein Rad des Fahrzeugs an der Kontaktstelle zwischen der Schiene und dem mindestens einen Rad ausgeübt wird; und
- ein Steuermittel;

wobei das Steuermittel dazu eingerichtet ist, um:

- die mindestens eine Bremsvorrichtung mit einem Betätigungssignal zu versehen, das eingerichtet ist, der mindestens eine Bremsvorrichtung anzufordern, eine Bremskraft aufweisend einen vorbestimmten Überprüfung-Bremskraftwert (Fa) an dem mindestens einen Rad oder der mindestens einen Achse zu erzeuge
- den Reibkraftwert (Fb), die durch das Reibkraftmesssystem gemessen wird, zu empfangen;
- den empfangenen Reibkraftwert (Fb) mit einem erwarteten Reibkraftwert zu vergleichen;
- zu bestimmen, dass die mindestens eine Bremsvorrichtung fehlerhaft arbeitet, wenn der empfangene Reibkraftwert (Fb) von dem erwarteten Reibkraftwert verschieden ist.

15. System zur Überprüfung der Funktion mindestens einer Bremsvorrichtung mindestens eines Fahrzeugs, insbesondere mindestens eines Schienenfahrzeugs, wobei das mindestens eine Fahrzeug umfasst:

- eine Mehrzahl von Rädern oder eine Mehrzahl von Achsen, an denen jeweilige Räder gekoppelt sind, wobei die Räder zum Fahren auf einer Schiene eingerichtet sind;
- eine Mehrzahl von Bremsvorrichtungen, wobei jede Bremsvorrichtung mindestens einem der Räder oder mindestens einer der Achsen zugeordnet ist;
wobei das System zur Überprüfung der Funktion mindestens einer Bremsvorrichtung umfasst:

- ein System zum Messen einer Reibkraft, das eingerichtet ist, einen Gesamtreibkraftwert ($Fb_{tot}$) zu messen, der durch die Rädern auf der Schiene ausgeübt wird; und
- ein Steuermittel;

wobei das Steuermittel dazu eingerichtet ist, um:

- die Mehrzahl der Bremsvorrichtungen mit mindestens einem Betätigungssignal zu versehen, das eingerichtet ist, der Mehrzahl von Bremsvorrichtungen anzufordern, jeweilige Bremskräfte aufweisend einen vorbestimmten Überprüfung-Bremskraftwert ($Fa$) an den Rädern oder Achsen zu erzeugen;
- den Gesamtreibkraftwert ($F_{tot}$) die durch das Reibkraftmesssystem gemessen wird, zu empfangen;
- den empfangenen Gesamtreibkraftwert ($Fb_{tot}$) mit einem erwarteten Reibkraftwert zu vergleichen;
- zu bestimmen, dass mindestens eine Bremsvorrichtung der Mehrzahl der Bremsvorrichtungen fehlerhaft arbeitet, wenn der empfangene Gesamtreibkraftwert ($Fb_{tot}$) von dem erwarteten Gesamtreibkraftwert verschieden ist.

**Revendications**

1. Procédé de vérification du fonctionnement d'au moins un moyen de freinage d'au moins un véhicule, en particulier d'au moins un véhicule ferroviaire, dans lequel ledit au moins un véhicule comprend

- au moins une roue ou au moins un essieu auquel est couplée au moins une roue, ladite au moins une roue étant agencée pour rouler sur un rail ;
- au moins un moyen de freinage associé à ladite au moins une roue ou associé audit au moins un essieu ;

ledit procédé de vérification du fonctionnement dudit au moins un moyen de freinage comprenant les étapes consistant à :

a) déplacer ledit au moins un véhicule le long dudit rail ;
b) fournir audit au moins un moyen de freinage un signal d'actionnement prédéterminé apte à demander audit au moins un moyen de freinage de générer une force de freinage ayant une valeur de force de freinage de vérification prédéterminée ($Fa$) sur la ou les roues ou sur le ou les essieux ;
c) lorsqu'il est demandé audit au moins un moyen de freinage de générer une force de freinage ayant ladite valeur prédéterminée ($Fa$) sur la ou les roues ou sur le ou les essieux, mesurer au moins une valeur de force de friction exercée par ladite au moins une roue sur le rail en un point de contact entre ledit rail et ladite au moins une roue, la valeur de force de friction ($Fb$) étant causée par une force de freinage réelle générée par ledit au moins un moyen de freinage en réponse au signal d'actionnement reçu ;
d) convertir la valeur mesurée de force de friction ($Fb$) en une valeur estimée de force de freinage ;
e) comparer ladite au moins une valeur estimée de force de freinage avec ladite valeur prédéterminée de force de freinage de vérification ($Fa$) ;
f) déterminer que ledit au moins un moyen de freinage est défaillant lorsque ladite au moins une valeur estimée de force de freinage est différente de ladite valeur prédéterminée de force de freinage de vérification ($Fa$).

2. Procédé de vérification du fonctionnement dudit au moins un moyen de freinage selon la revendication 1, dans lequel ladite étape f) comprend :

f) vérifier si ladite valeur estimée de force de freinage diffère de ladite valeur de force de freinage de vérification ($Fa$) d'au moins une valeur de tolérance prédéterminée ;
f') déterminer que ledit au moins un moyen de freinage est défaillant, s'il a été vérifié que ladite valeur estimée de force de freinage diffère de ladite valeur de force de freinage de vérification ($Fa$) d'au moins ladite valeur de tolérance prédéterminée.

3. Procédé de vérification du fonctionnement d'au moins un moyen de freinage d'au moins un véhicule, en particulier d'au moins un véhicule ferroviaire, dans lequel ledit au moins un véhicule comprend :

- une pluralité de roues ou une pluralité d'essieux auxquels sont couplées des roues respectives, lesdites roues étant agencées pour rouler sur un rail ;
- une pluralité de moyens de freinage, chaque moyen de freinage de ladite pluralité étant associé à au moins une desdites roues ou associé à au moins un desdits essieux ;

ledit procédé de vérification du fonctionnement dudit au moins un moyen de freinage comprenant les étapes consistant à :

a) déplacer ledit au moins un véhicule le long du rail ;

b) fournir auxdits moyens de freinage au moins un signal d'actionnement prédéterminé apte à demander auxdits moyens de freinage de générer des forces de freinage respectives ayant une valeur de force de freinage de vérification prédéterminée (Fa) sur lesdites roues ou lesdits essieux ;

c) lorsqu'il est demandé auxdits moyens de freinage de générer les forces de freinage respectives ayant ladite valeur prédéterminée (Fa) sur les roues ou les essieux, mesurer au moins une valeur de force de friction totale ($Fb_{tot}$) générée sur le rail par la somme des valeurs de force de friction respectives (Fb) exercées par les roues aux points de contact respectifs entre ledit rail et lesdites roues, les valeurs de force de friction respectives (Fb) étant générées par des forces de freinage effectives respectives générées par lesdits moyens de freinage en réponse audit au moins un signal d'actionnement reçu ;

d) convertir la valeur totale de force de friction ($Fb_{tot}$) exercée par les roues en une valeur estimée de force de freinage totale ;

e) comparer ladite au moins une valeur estimée de force de freinage totale avec une valeur attendue de force de freinage totale de vérification ;

f) déterminer qu'au moins un moyen de freinage de ladite pluralité est défaillant lorsque ladite valeur estimée de force de freinage totale est différente de ladite valeur attendue de force de freinage totale.

**4.** Procédé de vérification du fonctionnement d'au moins un moyen de freinage selon la revendication 3, dans lequel ladite étape f) comprend :

f) vérifier si ladite valeur estimée de force de freinage totale diffère de ladite valeur attendue de force de freinage totale d'au moins une valeur de tolérance prédéterminée ;

f') déterminer que ledit au moins un moyen de freinage est défaillant, s'il a été vérifié que ladite valeur estimée de force de freinage totale diffère de ladite valeur attendue de force de freinage totale d'au moins ladite valeur de tolérance prédéterminée.

**5.** Procédé de vérification du fonctionnement d'au moins un moyen de freinage d'au moins un véhicule, en particulier d'au moins un véhicule ferroviaire, dans lequel ledit au moins un véhicule comprend :

- au moins une roue ou au moins un essieu auquel est couplée au moins une roue, ladite au moins une roue étant agencée pour rouler sur un rail ;
- au moins un moyen de freinage associé à ladite au moins une roue ou associé audit au moins un essieu ;

ledit procédé de vérification du fonctionnement dudit au moins un moyen de freinage comprenant les étapes consistant à :

a) déplacer ledit au moins un véhicule le long du rail ;

b) fournir audit au moins un moyen de freinage un signal d'actionnement prédéterminé apte à demander audit au moins un moyen de freinage de générer une force de freinage ayant une valeur de force de freinage de vérification prédéterminée (Fa) sur la ou les roues ou sur le ou les essieux ;

c) lorsqu'il est demandé audit au moins un moyen de freinage de générer une force de freinage ayant ladite valeur prédéterminée (Fa) sur la ou les roues ou sur le ou les essieux, mesurer au moins une valeur de force de friction (Fb) exercée par ladite au moins une roue sur le rail à un point de contact entre ledit rail et ladite au moins une roue, la valeur de force de friction (Fb) étant générée par une force de freinage réelle générée par ledit au moins un moyen de freinage en réponse audit signal d'actionnement reçu ;

d) comparer ladite au moins une valeur de force de friction mesurée (Fb) avec une valeur attendue de force de friction ;

e) déterminer que ledit au moins un moyen de freinage est défaillant lorsque ladite au moins une valeur de force de friction mesurée (Fb) diffère de ladite valeur attendue de force de friction.

**6.** Procédé de vérification du fonctionnement d'au moins un moyen de freinage selon la revendication 5, dans lequel ladite étape e) comprend :

e') vérifier si ladite valeur de force de friction (Fb) diffère de ladite valeur attendue de force de friction d'au moins une valeur de tolérance prédéterminée ;

e") déterminer que ledit au moins un moyen de freinage est défaillant, s'il a été vérifié que ladite valeur de force de friction (Fb) diffère de ladite valeur attendue de force de friction d'au moins ladite valeur de tolérance prédéterminée.

**7.** Procédé de vérification du fonctionnement d'au moins un moyen de freinage d'au moins un véhicule, en particulier d'au moins un véhicule ferroviaire, dans lequel ledit au moins un véhicule comprend

- une pluralité de roues ou une pluralité d'essieux auxquels sont couplées des roues respectives, lesdites roues étant agencées pour rouler sur un rail ;
- une pluralité de moyens de freinage, chaque moyen de freinage de ladite pluralité étant associé à au moins une desdites roues ou associé à au moins un desdits essieux ;

ledit procédé de vérification du fonctionnement dudit au moins un moyen de freinage comprenant les étapes consistant à :

a) déplacer ledit au moins un véhicule le long du rail ;
b) fournir auxdits moyens de freinage au moins un signal d'actionnement prédéterminé apte à demander auxdits moyens de freinage de générer des forces de freinage respectives ayant une valeur de force de freinage de vérification prédéterminée (Fa) sur les roues ou les essieux ;
c) lorsqu'il est demandé aux moyens de freinage de générer les forces de freinage respectives ayant ladite valeur prédéterminée (Fa) sur les roues ou les essieux, mesurer au moins une valeur de force de friction totale (Fb$_{tot}$) générée sur le rail par la somme des valeurs de force de friction respectives (Fb) exercées par les roues aux points de contact respectifs entre le rail et lesdites roues, les valeurs de force de friction respectives (Fb) étant générées par des forces de freinage effectives respectives générées par lesdits moyens de freinage en réponse audit au moins un signal d'actionnement reçu ;
d) comparer ladite valeur de force de friction totale (Fb$_{tot}$) avec une valeur attendue de force de friction totale ;
e) déterminer qu'au moins un moyen de freinage de ladite pluralité est défaillant lorsque ladite valeur de force de friction totale (Fb$_{tot}$) diffère de ladite valeur attendue de force de friction totale.

8. Procédé de vérification du fonctionnement d'au moins un moyen de freinage selon l'une quelconque des revendications précédentes, dans lequel l'étape a) est effectuée en positionnant ledit au moins un véhicule sur un rail incliné ; dans lequel le véhicule est déplacé selon une valeur d'accélération de déplacement générée par l'effet de la gravité ; ou, dans lequel ladite étape a) est effectuée au moyen d'un moyen de locomotion agencé pour remorquer ledit au moins un véhicule le long dudit rail selon une valeur d'accélération de déplacement.

9. Procédé de vérification du fonctionnement d'au moins un moyen de freinage selon l'une quelconque des revendications précédentes,

dans lequel ledit signal d'actionnement prédéterminé est un signal d'actionnement pneumatique prédéterminé ;
dans lequel, ledit au moins un véhicule comprend une conduite de frein apte à permettre la fourniture dudit signal d'actionnement pneumatique prédéterminé audit au moins un moyen de freinage ou à la pluralité de moyens de freinage;
dans lequel ladite étape b) comprend :
imposer, dans ladite conduite de frein, le signal d'actionnement pneumatique prédéterminé ayant une valeur de pression apte à amener lesdits moyens de freinage, lorsqu'ils fonctionnent correctement, à produire la force de freinage ayant ladite valeur prédéterminée de force de freinage de vérification (Fa).

10. Procédé de vérification du fonctionnement d'au moins un moyen de freinage selon l'une quelconque des revendications 1 à 8, dans lequel ledit signal d'actionnement prédéterminé est un signal d'actionnement électrique prédéterminé ;

dans lequel, ledit au moins un véhicule comprend une ligne électrique agencée pour permettre la fourniture dudit signal d'actionnement électrique prédéterminé audit au moins un moyen de freinage ou à la pluralité de moyens de freinage ;
dans lequel ladite étape b) comprend :

- imposer sur ladite ligne électrique le signal d'actionnement électrique prédéterminé ayant une valeur de courant ou de tension apte à amener lesdits moyens de freinage, lorsqu'ils fonctionnent correctement, à produire la force de freinage ayant ladite valeur prédéterminée de force de freinage de vérification (Fa).

11. Procédé de vérification du fonctionnement d'au moins un moyen de freinage selon l'une quelconque des revendications 1 à 8, dans lequel, ledit au moins un véhicule comprend au moins un moyen de commande de freinage local associé audit au moins un moyen de freinage ou à ladite pluralité de moyens de freinage ;

dans lequel ladite étape b) comprend :
b') au moyen dudit au moins un moyen de commande de freinage local, générer le signal d'actionnement.

12. Système de vérification du fonctionnement d'au moins un moyen de freinage d'au moins un véhicule, en particulier d'au moins un véhicule ferroviaire, dans lequel ledit au moins un véhicule comprend :

- au moins une roue ou au moins un essieu auquel est couplée au moins une roue, ladite au moins une roue étant agencée pour rouler sur un rail ;
- au moins un moyen de freinage associé à ladite au moins une roue ou associé audit au moins un essieu ;

ledit système de vérification du fonctionnement d'au moins un moyen de freinage d'au moins un véhicule comprenant :

- un système de mesure d'une force de friction agencé pour mesurer une valeur de force de friction (Fb) exercée par ladite au moins une roue, en un point de contact entre ledit rail et ladite au moins une roue ; et
- un moyen de commande ;

ledit moyen de commande étant agencé pour :

- fournir audit au moins un moyen de freinage un signal d'actionnement apte à demander audit au moins un moyen de freinage de générer une force de freinage ayant une valeur de force de freinage de vérification prédéterminée (Fa) sur la ou les roues ou sur le ou les essieux ;
- recevoir la valeur de force de friction (Fb) mesurée par le système de mesure de force de friction ;
- convertir la valeur de force de friction reçue (Fb) en une valeur estimée de force de freinage ;
- comparer ladite au moins une valeur estimée de force de freinage avec une valeur attendue de force de freinage de vérification ;
- déterminer que ledit au moins un moyen de freinage associé est défaillant lorsque ladite au moins une valeur estimée de force de freinage est différente de ladite valeur attendue de force de freinage de vérification prédéterminée.

13. Système de vérification du fonctionnement d'au moins un moyen de freinage d'au moins un véhicule, en particulier d'au moins un véhicule ferroviaire, dans lequel ledit au moins un véhicule comprend :

- une pluralité de roues ou une pluralité d'essieux auxquels sont couplées des roues respectives, lesdites roues étant agencées pour rouler sur un rail ;
- une pluralité de moyens de freinage, chaque moyen de freinage de ladite pluralité étant associé à au moins une desdites roues ou associé à au moins un desdits essieux ;
ledit système de vérification du fonctionnement d'au moins un moyen de freinage d'au moins un véhicule comprenant :

- un système de mesure d'une force de friction agencé pour mesurer une valeur de force de friction totale (Fb_{tot}) exercée par les roues sur le rail ; et
- un moyen de commande ;

ledit moyen de commande étant agencé pour :

- fournir à ladite pluralité de moyens de freinage au moins un signal d'actionnement apte à demander à ladite pluralité de moyens de freinage de générer des forces de freinage respectives ayant une valeur de force de freinage de vérification prédéterminée (Fa) sur lesdites roues ou sur lesdits essieux ;
- recevoir la valeur de force de friction totale (Fb_{tot}) mesurée par le système de mesure de force de friction ;
- convertir la valeur de force de friction totale (Fb_{tot}) exercée par les roues en une valeur estimée de force de freinage totale ;
- comparer ladite valeur estimée de force de freinage totale avec une valeur attendue de force de freinage totale ;
- déterminer qu'au moins un moyen de freinage de ladite pluralité est défaillant lorsque ladite valeur estimée de force de freinage totale est différente de ladite valeur attendue de force de freinage totale de vérification.

14. Système de vérification du fonctionnement d'au moins un moyen de freinage d'au moins un véhicule, en particulier d'au moins un véhicule ferroviaire, dans lequel ledit au moins un véhicule comprend :

- au moins une roue ou au moins un essieu auquel est couplée au moins une roue, ladite au moins une roue étant agencée pour rouler sur un rail ;
- au moins un moyen de freinage associé à ladite au moins une roue ou associé audit au moins un essieu ;

ledit système de vérification du fonctionnement d'au moins un moyen de freinage d'au moins un véhicule comprenant :

- un système de mesure d'une force de friction agencé pour mesurer une valeur de force de friction (Fb) exercée par ladite au moins une roue du véhicule, au point de contact entre le rail et ladite au moins une roue ; et
- un moyen de commande ;

ledit moyen de commande étant agencé pour :

- fournir audit au moins un moyen de freinage un signal d'actionnement apte à demander audit au moins un moyen de freinage de générer une force de freinage ayant une valeur de force de freinage de vérification prédéterminée (Fa) sur la ou les roues ou sur le ou les essieux ;
- recevoir la valeur de force de friction (Fb) mesurée par le système de mesure de force de friction ;
- comparer la valeur de force de friction reçue (Fb) avec une valeur attendue de force de friction ;
- déterminer que ledit au moins un moyen de freinage est défaillant lorsque ladite valeur de force de friction reçue (Fb) est différente de ladite valeur attendue de force de friction.

15. Système de vérification du fonctionnement d'au moins un moyen de freinage d'au moins un véhicule, en particulier d'au moins un véhicule ferroviaire, dans lequel ledit au moins un véhicule comprend :

- une pluralité de roues ou une pluralité d'essieux auxquels sont couplées des roues respectives, lesdites roues étant agencées pour rouler sur un rail ;
- une pluralité de moyens de freinage, chaque moyen de freinage de ladite pluralité étant associé à au moins une desdites roues ou associé à au moins un desdits essieux ;

ledit système de vérification du fonctionnement d'au moins un moyen de freinage d'au moins un véhicule comprenant :

- un système de mesure d'une force de friction agencé pour mesurer une valeur de force de friction totale ($Fb_{tot}$) exercée par les roues sur le rail ; et
- un moyen de commande ;

ledit moyen de commande étant agencé pour :

- fournir à ladite pluralité de moyens de freinage au moins un signal d'actionnement apte à demander à ladite pluralité de moyens de freinage de générer des forces de freinage respectives ayant une valeur de force de freinage de vérification prédéterminée (Fa) sur lesdites roues ou sur lesdits essieux ;
- recevoir la valeur de force de friction totale ($Fb_{tot}$) mesurée par le système de mesure de force de friction ;
- comparer ladite valeur de force de friction totale ($Fb_{tot}$) reçue avec une valeur attendue de force de friction totale ;
- déterminer qu'au moins un moyen de freinage de ladite pluralité est défaillant lorsque ladite valeur de force de friction totale ($Fb_{tot}$) reçue est différente de ladite valeur attendue de force de friction totale.

fig. 1

EP 4 543 723 B1

fig. 2a

fig. 2b

fig. 3

EP 4 543 723 B1

fig. 4

EP 4 543 723 B1

fig. 5

EP 4 543 723 B1

fig. 6

fig.7

fig.8

EP 4 543 723 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014088801 A1